(19) Europäisches Patentamt
European Patent Office
Office européen des brevets

(11) **EP 3 934 113 B1**

(12) **FASCICULE DE BREVET EUROPEEN**

(45) Date de publication et mention
de la délivrance du brevet:
**02.08.2023 Bulletin 2023/31**

(21) Numéro de dépôt: **21181359.7**

(22) Date de dépôt: **24.06.2021**

(51) Classification Internationale des Brevets (IPC):
***H04B 3/54*** *(2006.01)*

(52) Classification Coopérative des Brevets (CPC):
**H04B 3/54; H04B 3/542;** H04B 2203/5433

(54) **PROCÉDÉ DE TRANSMISSION DANS PLUSIEURS BANDES FRÉQUENTIELLES ENTRE DEUX DISPOSITIFS VOISINS D'UN RÉSEAU**

VERFAHREN ZUR ÜBERTRAGUNG IN MEHREREN FREQUENZBÄNDERN ZWISCHEN ZWEI BENACHBARTEN GERÄTEN IN EINEM NETZWERK

METHOD FOR TRANSMISSION ON A PLURALITY OF FREQUENCY BANDS BETWEEN TWO NEIGHBOURING DEVICES OF A NETWORK.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2020 FR 2006950**

(43) Date de publication de la demande:
**05.01.2022 Bulletin 2022/01**

(73) Titulaire: **Sagemcom Energy & Telecom SAS
92500 Rueil-Malmaison (FR)**

(72) Inventeurs:
• **BAROIS, Jérôme
92500 RUEIL MALMAISON (FR)**
• **ROTER, Ziv
92500 RUEIL MALMAISON (FR)**
• **BARTHES, Julien
92500 RUEIL MALMAISON (FR)**
• **TERRIEN, Clément
92500 RUEIL MALMAISON (FR)**
• **BACRI, Guillaume
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
EP-A1- 3 104 569     US-A1- 2012 134 395
US-A1- 2012 189 042     US-A1- 2013 182 719
US-A1- 2016 127 515

EP 3 934 113 B1

**Description**

DOMAINE TECHNIQUE

Au moins un mode de réalisation de la présente invention concerne un procédé de transmission d'un message à partir d'un premier dispositif noeud vers un second dispositif noeud appartenant à un voisinage réseau du premier dispositif noeud, lesdits premier et second dispositifs noeuds appartenant à un réseau utilisant des communications par courants porteurs en ligne. Au moins un mode de réalisation de la présente invention concerne un dispositif mettant en oeuvre le procédé.

ETAT DE LA TECHNIQUE ANTERIEURE

Les communications par courants porteurs en ligne PLC (sigle signifiant « Power Line Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller. La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment. Un exemple d'art antérieur peut être trouvé dans US 2012/134395

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Or, les besoins en termes de ressources des réseaux de communication, notamment dans le déploiement des réseaux d'alimentation électrique de type AMM, grandissent de jour en jour. La bande fréquentielle, pour laquelle les éléments constitutifs d'un réseau ont été certifiés, peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

Il est souhaitable de pallier ces différents inconvénients de l'état de la technique. Il est ainsi notamment souhaitable de proposer une solution de communication par courant porteur en ligne permettant d'augmenter la capacité de nombre d'échanges dans le réseau de communication. Il est notamment souhaitable de proposer une solution applicable aux réseaux d'alimentation électrique de type AMM.

EXPOSE DE L'INVENTION

La présente invention est définie par les revendications indépendantes. D'autres modes de réalisation préférés peuvent être trouvés dans les revendications dépendantes. La présente application divulgue un procédé de transmission de données, sous forme de messages, dans un réseau de communication par courants porteurs en ligne, le procédé étant exécuté dans un premier dispositif noeud dudit réseau configuré pour communiquer dans une pluralité de bandes fréquentielles disjointes avec un second dispositif noeud dudit réseau, le procédé comprenant une émission d'un message dans un mode de transmission utilisant parallèlement au moins deux bandes fréquentielles disjointes parmi ladite pluralité de bandes fréquentielles disjointes, et le procédé étant caractérisé en ce que l'émission d'un message dans un mode de transmission utilisant parallèlement au moins deux bandes fréquentielles disjointes comprend une utilisation d'une bande fréquentielle dite bande fréquentielle étendue mcomprenant au oins deux bandes fréquentielles disjointes parmi ladite pluralité de bandes fréquentielles disjointes, chaque bande fréquentielle disjointe comprenant une pluralité de sous-porteuses, le procédé comprenant en outre une étape d'entrelacer des données d'un message à transmettre adaptée à une émission desdites données réparties sur l'ensemble desdites sous-porteuses.La présente application divulgue un dispositif noeud destiné à être utilisé dans un réseau de communication par courants porteurs en ligne, le dispositif noeud étant configuré pour communiquer dans une pluralité de bandes fréquentielles disjointes avec un second dispositif noeud dudit réseau et pour appliquer un mode de transmission dans, parallèlement, au moins deux bandes fréquentielles disjointes parmi une pluralité de bandes fréquentielles disjointes, le dispositif noeud étant caractérisé en ce qu'il est configuré pour émettre ledit message dans un mode de transmission utilisant parallèlement au moins deux bandes fréquentielles disjointes en utilisant une bande fréquentielle dite « bande fréquentielle étendue » comprenant au moins deux bandes fréquentielles disjointes parmi ladite pluralité de bandes fréquentielles disjointes, chaque bande fréquentielle disjointe comprenant une pluralité de sous-porteuses, le dispositif noeud comprenant une circuiterie d'entrelacement pour entrelacer des données d'un message à transmettre adaptée à une émission desdites données réparties sur l'ensemble desdites sous-porteuses.

L'invention a également pour objet un réseau de communication par courants porteurs en ligne comprenant une pluralité de dispositifs noeuds tels que précédemment décrits.

L'invention concerne également un produit programme d'ordinateur comprenant des instructions de codes de programme pour exécuter des étapes du procédé précédemment décrit lorsque le programme est exécuté par un processeur, ainsi qu'un support de stockage d'informations comprenant un tel produit programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre un réseau d'alimentation électrique utilisant des communications par courants porteurs en ligne comprenant un dispositif mettant en oeuvre le procédé selon l'invention ;

[Fig. 2] est un ordinogramme illustrant un premier mode de réalisation utilisant une transmission en bande fréquentielle étendue ;

[Fig. 3] est une représentation schématique d'un entrelacement de données adapté à une communication en bande fréquentielle étendue, selon le premier mode de réalisation ;

[Fig. 4] est un ordinogramme illustrant un deuxième mode de réalisation utilisant une transmission dans un mode de communication robuste en multi-bandes ;

[Fig. 5] est un ordinogramme illustrant un troisième mode de réalisation utilisant une transmission d'un message fragmenté sur plusieurs bandes fréquentielles disjointes ;

[Fig. 6] est un ordinogramme illustrant un quatrième mode de réalisation visant à optimiser le temps de transmission d'un message en multi-bandes ;

[Fig. 7] est un ordinogramme illustrant un cinquième mode de réalisation visant à optimiser la bande passante pour une transmission en multi-bandes ;

[Fig. 8] est un ordinogramme illustrant un sixième mode de réalisation comprenant un calcul de coûts de routes pour une communication en multi-bandes ;

[Fig. 9] est un ordinogramme illustrant un septième mode de réalisation comprenant une détermination par un dispositif noeud des capacités de communication d'un dispositif noeud voisin en vue d'une communication en multi-bandes ;

[Fig. 10] illustre schématiquement l'architecture interne d'un dispositif noeud du réseau de communication déjà illustré sur la Fig. 1 ;

[Fig. 11] illustre schématiquement un exemple d'architecture d'une chaîne de réception d'un dispositif noeud configuré pour opérer un mode de réception en multi-bandes.

EXPOSE DETAILLE DE MODES DE REALISATION

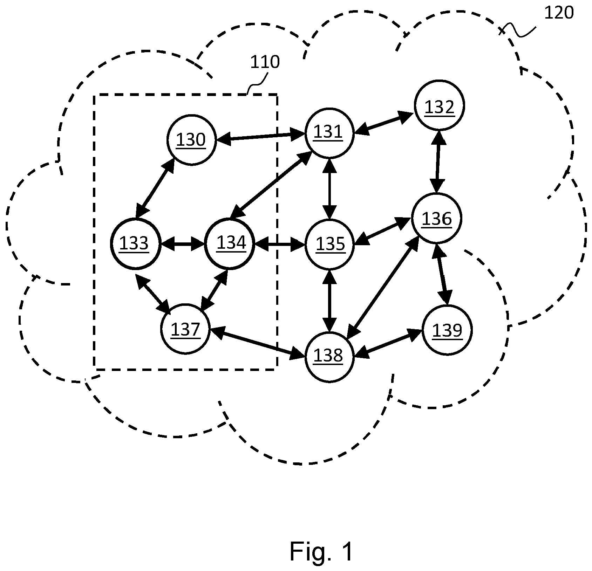

La **Fig. 1** illustre schématiquement un réseau de communication 120. Le réseau de communication 120 s'appuie sur des communications par courants porteurs en ligne PLC. Le réseau de communication 120 est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que les compteurs électriques intelligents sont respectivement en charge de surveiller. Le concentrateur de données et les compteurs électriques intelligents sont ainsi des dispositifs noeuds du réseau de communication 120. Le réseau de communication 120 peut comporter d'autres dispositifs noeuds, par exemple installés au niveau de transformateurs électriques.

Le réseau de communication 120 a une structure maillée. La structure maillée du réseau de communication 120 est représentée schématiquement sur la Fig. 1 grâce à des flèches représentant les liens de communication entre deux noeuds voisins et où des dispositifs noeuds jouent le rôle de relais pour augmenter la portée des communications dans le réseau de communication 120. Un même compteur électrique intelligent dispose ainsi potentiellement de plusieurs routes pour atteindre le concentrateur de données, et vice versa. La présente invention est donc particulièrement adaptée au contexte de la technologie G3-PLC.

Le réseau de communication 120 comporte ainsi une pluralité de dispositifs noeuds 130, 131, 132, 133, 134, 135, 136, 137, 138, 139. A chacun des dispositifs noeuds du réseau de communication 120 est associé un voisinage réseau. Par exemple, le dispositif noeud 133 de la Fig. 1 est associé à un voisinage réseau 110 englobant les dispositifs noeuds 130, 134 et 137. Dans le réseau de communication 120, un signal ou un message diffusé par un dispositif noeud, tel que par exemple, le dispositif noeud 133, n'est généralement pas visible en tout point du réseau de communication 120. Chaque dispositif noeud émetteur de signaux ou de messages dispose alors d'un voisinage réseau, c'est-à-dire d'un sous-ensemble du réseau de communication 120 dans lequel tout dispositif noeud peut recevoir de manière intelligible les signaux ou messages directement en provenance du dispositif noeud ayant diffusé ces signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source des signaux et aussi potentiellement en fonction de caractéristiques du canal de communication telles que, par exemple, une atténuation, un niveau de bruit, une impédance.

Le réseau de communication 120 s'appuie sur un protocole de routage de type réactif, tel que, par exemple, le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication 120. Pour découvrir une route appropriée dans le réseau de communication 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite copie de la requête si ledit dispositif noeud en question n'est pas le dispositif noeud destination. Par diffusion de proche en proche, plusieurs copies de la requête de découverte de route sont typiquement reçues par le dispositif noeud destination, chacune de ces copies ayant suivi un chemin différent dans le réseau de communication 120.

L'utilisation de tables de routage mémorisées dans les dispositifs noeuds permet d'effectuer des communications point-à-point (« unicast » en anglais) entre toute paire de dispositifs noeuds du réseau de communication 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en oeuvre du réseau de communication 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B. Il apparaît de ce qui précède, qu'un dispositif noeud peut utiliser simultanément plusieurs bandes fréquentielles disjointes pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud, étant donné qu'elles se recouvrent. Avantageusement, au moins certains des dispositifs noeuds 130, 131, 132, 133, 134, 135, 136, 137, 138, 139 sont configurés pour communiquer dans plusieurs bandes fréquentielles disjointes. Il est dès lors important, pour un dispositif noeud donné, de pouvoir déterminer quels sont les modes de communication supportés par un dispositif noeud dans son voisinage réseau. Les termes « modes de communications supportés » désignent un ou plusieurs modes de communication natifs d'un dispositif noeud, c'est-à-dire que ce dernier est capable d'implémenter du fait de ses configurations possibles, et impliquent aussi que ce ou ces modes de communication natifs soient utilisables à un instant donné, compte tenu des éventuelles perturbations qui peuvent exister. Les perturbations peuvent être issues, par exemple, d'un environnement bruité.

Un échange de messages selon un protocole prédéfini permet, par exemple, à un premier dispositif noeud d'obtenir des informations quant aux capacités de communication d'un second dispositif noeud voisin. Par exemple, le premier dispositif noeud adresse au second dispositif noeud voisin un exemplaire d'un premier message dans chacune des bandes fréquentielles dans lesquelles il peut communiquer du fait de sa configuration, et le dispositif noeud voisin est configuré pour reconnaître un tel message et y répondre par un second message dans chacune des bandes fréquentielles dans laquelle il a pu le recevoir.

Dans un contexte G3-PLC, par exemple, les exemplaires du premier message contiennent une information selon laquelle une estimation de canal est sollicitée auprès du dispositif noeud voisin, pour la bande fréquentielle dans laquelle il a reçu le message (requête dite « Tone Map »). Avantageusement, l'information selon laquelle une estimation canal est sollicitée auprès du second dispositif noeud voisin par le premier dispositif noeud est alors un indicateur *Tone Map Request* d'un entête de contrôle de trame défini selon la recommandation ITU-T G9903. Ainsi, le second dispositif noeud voisin répondra à la requête *Tone Map Request* en envoyant au premier dispositif noeud, dans chacune des bandes fréquentielles dans laquelle il a reçu un exemplaire du premier message, un second message comprenant des informations représentatives d'au moins une estimation de canal sous la forme d'un bloc de données *Tone Map Response* tel que défini selon la recommandation ITU-T G9903.

Le premier dispositif pourra donc connaître et mémoriser des informations quant aux bandes fréquentielles qu'il peut utiliser pour communiquer avec le second dispositif noeud voisin. Avantageusement, certains des dispositifs noeuds 130 à 139 sont configurés pour opérer au moins un mode de communication utilisant parallèlement plusieurs bandes fréquentielles disjointes. Ainsi le dispositif noeud 133, par exemple, est configuré pour communiquer dans une seule bande fréquentielle disjointe, parallèlement dans plusieurs bandes fréquentielles disjointes (multi-bandes) ou encore en bande fréquentielle étendue.

Selon un mode de réalisation de l'invention, au moins une partie des dispositifs noeuds 130, 131, 132, 133, 134, 135, 136, 137, 138, 139 supportant des modes de communication dans plusieurs bandes fréquentielles disjointes supporte en outre un mode de communication en bande fréquentielle dite « bande fréquentielle étendue ». Une bande fréquentielle étendue comprend avantageusement plusieurs bandes fréquentielles disjointes. Ainsi une bande fréquentielle étendue peut comprendre deux, trois ou quatre bandes fréquentielles disjointes, par exemple, ou plus encore. Chaque bande fréquentielle disjointe utilise une pluralité de sous porteuses.

La détermination de la capacité d'un dispositif noeud voisin à communiquer dans une bande fréquentielle étendue est similaire à ce qui est précédemment décrit pour la détermination des différents modes de communication supportés par un dispositif, dès lors que la bande fréquentielle étendue est communément définie entre les différents dispositifs noeuds voisins du réseau de communication. Ainsi, selon un mode de réalisation, la bande fréquentielle étendue peut être définie comme comprenant la bande fréquentielle CENELEC A, la bande fréquentielle CENELEC B et la bande FCC. Selon une variante, la bande fréquentielle étendue peut être définie comme comprenant la bande fréquentielle CENELEC A, la bande fréquentielle CENELEC B et la bande fréquentielle ARIB. Un premier dispositif noeud peut donc émettre une requête en estimation de canal (requête dite « TONE MAP ») dans la bande fréquentielle étendue pour déterminer si un second dispositif noeud voisin supporte des communications dans la bande fréquentielle étendue.

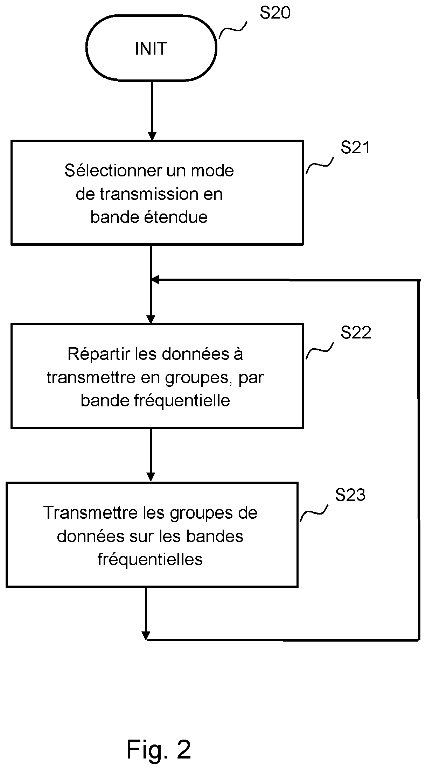

La **Fig. 2** illustre un procédé de transmission dans une bande fréquentielle étendue selon un premier mode de réalisation. Le procédé illustré est exécuté dans l'un, premier, des dispositifs noeuds du réseau de communication 120, configuré de sorte à supporter un mode de transmission en bande fréquentielle étendue, et qui communique avec un second dispositif noeud voisin, lui aussi configuré pour communiquer en bande fréquentielle étendue. Le premier dispositif noeud dans lequel est exécuté le procédé est, par exemple, le dispositif noeud 133 qui communique avec le second dispositif noeud, voisin, 134.

Au terme d'une étape d'initialisation **S20,** les premier et second dispositifs noeuds 133 et 134 sont configurés pour communiquer l'un avec l'autre selon au moins un mode de communication dans au moins une bande fréquentielle. Il est considéré que les dispositifs sont alors normalement opérationnels, à ce stade, et qu'un échange de messages peut être initié.

Selon un mode de réalisation, le premier dispositif noeud 133 est configuré lors d'une étape **S21** pour opérer des communications dans une bande fréquentielle étendue. Cette configuration est par exemple réalisée par une écriture, par un module de contrôle du premier dispositif noeud 133, d'un indicateur de validation de bande fréquentielle étendue. Selon un mode de réalisation, cet indicateur est un élément binaire (bit) positionné à « 1 » dans un registre de configuration du dispositif noeud 133 qui contrôle un entrelacement de données à émettre selon un mode d'entrelacement propre à une transmission en bande fréquentielle étendue.

La configuration du premier dispositif noeud 133 dans un mode de communication en bande fréquentielle étendue peut être réalisée, par exemple, après que le premier dispositif noeud 133 ait adressé une requête en estimation de canal, laquelle requête comprend un indicateur selon lequel une bande fréquentielle étendue est concerné par cette requête, et que le second dispositif noeud voisin 134 ait alors répondu à cette requête en indiquant au premier dispositif noeud 133 qu'il est bien comptable avec une communication en bande fréquentielle étendue. La réponse du second dispositif noeud voisin 134 est, par exemple, réalisée sous la forme d'un message contenant des informations représentatives d'une estimation de canal, sur chacune des bandes fréquentielles comprises dans la bande fréquentielle étendue telle que définie par le premier dispositif noeud 133.

Selon une variante, le premier dispositif noeud 133 est nativement conçu pour opérer des communications en bande fréquentielle étendue, telle que la bande fréquentielle est définie dans la présente description et aucune configuration particulière du premier dispositif noeud 133 n'est requise après une phase d'initialisation suite à une mise sous tension.

Ainsi, il est considéré que le dispositif noeud 133 est configuré pour communiquer en bande fréquentielle étendue au terme de l'étape d'initialisation S20 et applique un mode de communication en bande fréquentielle étendue, que cela ait requis une configuration particulière (sélection d'un mode de communication, par exemple) ou encore que cette configuration soit native, c'est-à-dire inhérente à la conception du premier dispositif noeud 133 et aux différents circuits électroniques qui le composent.

Bien évidemment le premier dispositif noeud 133 est configuré pour opérer tout échange de messages ou de signaux protocolaires destiné à organiser et gérer le partage du réseau avec d'autres dispositifs noeuds. De tels échanges ont ainsi vocation à solliciter un accès au réseau, ou encore à enregistrer des informations relatives aux capacités de communications des dispositifs noeuds voisins, tels que le second dispositif noeud 134, par exemple.

Une répartition des données à transmettre en bande fréquentielle étendue, dans chacune des bandes fréquentielles disjointes de la bande étendue définie, est opérée lors d'une étape S22. Lors de cette étape S22, les données sont réparties en différents groupes de données. Les données de chacun des différents groupes sont destinées à être émises dans une bande fréquentielle unique attribuée au groupe. Il est considéré ici, indifféremment, qu'un groupe de données est attribué à une seule des bandes fréquentielles comprises dans la bande fréquentielle étendue, ou vice-versa. Selon un mode de réalisation, les groupes de données réparties sont des ensembles d'éléments binaires b1, b2, b3, b4, ..., bi,...bn en provenance d'un flux sériel d'éléments binaires. Par exemple, les données ainsi présentées sous la forme d'un flux sériel proviennent d'un encodeur convolutionnel, tel qu'un encodeur Viterbi. Avantageusement, la répartition des données à transmettre dans une bande fréquentielle étendue, en plusieurs groupes, est réalisée lors d'une étape d'entrelacement des données. L'étape d'entrelacement des données est réalisée par une circuiterie dite « entrelaceur ». Selon un mode de réalisation, l'entrelacement est avantageusement opéré à partir d'une table d'entrelacement d'entrée comprenant une pluralité de tables d'entrelacement de sortie, comme cela est expliqué plus loin dans la présente description.

Après l'entrelacement décrit et réalisé dans le premier dispositif noeud 133, les données regroupées (réparties) dans autant de tables d'entrelacement de sortie de l'entrelaceur que de bandes fréquentielles disjointes comprises dans la bande fréquentielle étendue, sont adressées à des modulateurs du premier dispositif noeud 133 opérant chacun dans l'une des différentes bandes fréquentielles disjointes. Ainsi les données sont transmises au second dispositif noeud voisin 134, parallèlement et simultanément, par les différents modulateurs du premier dispositif noeud 133.

Le second dispositif noeud 134, configuré pour la réception des données en bande étendue, c'est-à-dire simultanément dans les mêmes bandes fréquentielles disjointes que celles utilisées pour la transmission, opère de façon inverse. En d'autres termes, le second dispositif noeud 134 démodule les données reçues dans chacune des bandes fréquentielles disjointes, désentrelace les données de façon inverse à ce qui est réalisé par l'entrelaceur du premier dispositif noeud 133, puis délivre un flux sériel d'éléments binaires à destination d'un décodeur Viterbi, le cas échéant, du second dispositif noeud 134.

L'ordinogramme de la Fig.2 rebouclant en début d'étape S22, illustre une continuité de traitement entre des opérations successives d'entrelacement de données à l'étape S22 et la transmission de ces mêmes données réparties en groupes, en bande fréquentielle étendue à l'étape S23, c'est-à-dire parallèlement sur plusieurs bandes fréquentielles disjointes et en utilisant conjointement toutes les sous-porteuses de chacune des bandes fréquentielles disjointes de la bande étendue. Ainsi, le flux d'éléments binaires en entrée de l'entrelaceur est traité par tronçons successifs d'éléments binaires. Pendant que des éléments binaires sont entrelacés, des éléments précédemment entrelacés sont transmis par les modulateurs. Selon un mode de réalisation, en cas de problème de transmission, le premier dispositif noeud 133 peut être reconfiguré dans un mode de communication distinct d'un mode de communication en bande étendue, ou encore peut transmettre via un dispositif noeud voisin autre que le second dispositif noeud voisin 134. Les différentes étapes de détermination de la qualité de la transmission et/ou de reconfiguration du premier dispositif noeud 133 ne sont pas représentées sur la Fig. 2, n'étant pas utiles à la compréhension de l'invention. Comme indiqué, la répartition des données à transmettre en bande fréquentielle étendue est astucieusement réalisée lors d'une opération d'entrelacement, de sorte, notamment, à simplifier l'adaptation de dispositifs noeuds existants pour supporter une transmission en bande fréquentielle étendue.

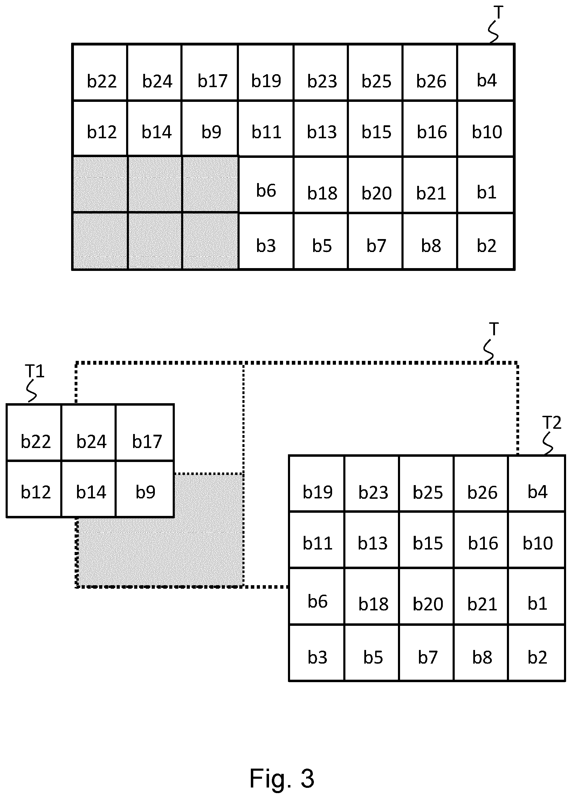

La **Fig.3** représente une table d'entrelacement T configurée pour opérer un entrelacement de données pour une communication en bande fréquentielle étendue. La table d'entrelacement T est obtenue par concaténation d'une première table d'entrelacement T1 et une seconde table d'entrelacement T2.

La première table d'entrelacement T est la table d'entrée de l'entrelaceur utilisée par le procédé de transmission décrit sur la Fig.2 et les tables d'entrelacement T1 et T2 sont des tables de sortie de l'entrelaceur utilisées pour la transmission des groupes de données réparties vers les différents modulateurs, par le procédé exécuté. Dans l'exemple décrit, deux modulateurs sont utilisés pour la transmission des données dans deux bandes fréquentielles disjointes de la bande fréquentielle étendue telle que définie.

Astucieusement, les tables d'entrelacement T1 et T2 présentent des dimensions respectives (nombre de lignes $m_i$ et de colonnes $n_i$) définies à partir des types de modulation utilisés dans chacune des bandes fréquentielles disjointes de la bande fréquentielle étendue. Selon un mode de réalisation, un premier modulateur utilise une modulation BPSK (sigle de « Binary Phase Shift Keying », en anglais) pour la première bande fréquentielle et un second modulateur utilise une modulation de type QPSK (sigle de « Quadrature Phase Shift Keying », en anglais). Ainsi la table d'entrelacement T1 correspond à une table d'entrelacement telle que définie, par exemple, selon la norme G3-PLC pour une modulation BPSK et ses dimensions sont définies par 2 lignes et 3 colonnes. De façon similaire, la table d'entrelacement T2 correspond à une table d'entrelacement telle que définie, par exemple, selon la norme G3-PLC pour une modulation QPSK et ses dimensions sont définies par 4 lignes et 5 colonnes. Selon la norme G3-PLC, les dimensions d'une table d'entrelacement sont définies de sorte que le nombre de colonnes est égal au nombre de sous-porteuses utilisées dans la bande fréquentielle utilisé pour la transmission des données et le nombre de lignes dépend du nombre d'éléments binaires à entrelacer. Ce nombre d'éléments binaires à entrelacer est donc déterminé selon le nombre d'éléments binaires codés par un symbole selon le type de modulation utilisée, et par le nombre de sous-porteuses utilisées pour la transmission des symboles.

Astucieusement, selon l'exemple de définition de la première table d'entrelacement T, la première table d'entrelacement T est obtenue par une concaténation des secondes tables d'entrelacement T1 et T2 qui seraient utilisées pour l'entrelacement des données en vue de la transmission dans une bande fréquentielle disjointe unique, respectivement en BPSK pour la seconde table d'entrelacement T1 et en QPSK pour la seconde table d'entrelacement T2. Des indices T1-11 à T1-13 indexent les différentes positions de la première ligne de la seconde table d'entrelacement T1, et des indices T1-21 à T1-23 indexent les différentes positions de la deuxième ligne de la seconde table d'entrelacement T1. De la même façon, des indices T2-11 à T2-15 indexent les différentes positions de la première ligne de la seconde table d'entrelacement T2, des indices T2-21 à T2-25 indexent les différentes positions de la deuxième ligne de la seconde table d'entrelacement T2, des indices T2-31 à T2-35 indexent les différentes positions de la troisième ligne de la seconde table d'entrelacement T2 et des indices T2-41 à T2-45 indexent les différentes positions de la quatrième ligne de la seconde table d'entrelacement T2. Les indices précités ne sont pas représentés sur la Fig.3 mais peuvent être utilisés pour une bonne compréhension de l'utilisation des tables selon le mode de réalisation décrit ici. Ainsi, plus généralement, un indice Ti [$m_i, n_i$] index, dans la présente description, une position à la $m$ ième ligne et la $n$ ième colonne d'une table Ti. Les indices précédemment cités indexent donc les différentes positions de la table d'entrelacement T obtenue par concaténation des tables d'entrelacement T1 et T2, de la Fig. 3 pour mieux illustrer le mode de concaténation utilisé. Selon un mode de réalisation, la concaténation des secondes tables d'entrelacement T1 et T2 est opérée de sorte que la table dont les colonnes correspondent à des bandes sous-porteuses de fréquences les plus basses est située à gauche. Les secondes tables d'entrelacement T1 et T2 sont concaténées pour définir la première table T en faisant concorder la première ligne de la seconde table d'entrelacement T1 avec la première ligne de la seconde table d'entrelacement T2, puis la deuxième ligne de la seconde table d'entrelacement T1 avec la deuxième ligne de la seconde table d'entrelacement T2. Ainsi la définition de la première table d'entrelacement T correspond à l'addition de la seconde table d'entrelacement T1 et de la seconde table d'entrelacement T2 auxquelles s'ajoute une troisième table entrelacement T' (représentée en grisé sur la Fig. 3) de sorte que la première table d'entrelacement T présente un même nombre de positions dans chacune de ses colonnes et dans chacune de ses lignes. Afin de simplifier les opérations d'entrelacement selon le mode de réalisation décrit, les positions comprises dans la table T' (positions qui apparaissent en grisé sur la Fig. 3), comprises dans la première table d'entrelacement T mais non comprises dans l'une au moins des secondes tables d'entrelacement T1 et T2, sont dites « invalides » puisque, après un entrelacement opéré dans la première table d'entrelacement T, des données (éléments binaires) pourraient être déplacées dans l'une de ces positions.

En effet, une opération d'entrelacement dans une table d'entrelacement consiste usuellement à décaler un certain nombre de fois le contenu de chacune des lignes et des colonnes par permutations circulaires des éléments binaires contenus dans les positions de la table. Chaque ligne étant classiquement décalée un nombre de fois différent des autres lignes et chaque colonne étant classiquement décalée un nombre de fois différent que les autres colonnes.

Des éléments binaires b1 à b26 d'un flux d'éléments binaires sont d'abord « chargés » de gauche à droite et de haut en bas dans la première table d'entrelacement T, préalablement à une opération d'entrelacement, de sorte que les positions invalides soient ignorées. L'élément binaire b1 est chargé dans la position T-11, b2 est chargé dans la position T-12, ... b13 dans la position T-25, ... et b26 dans la position T-48. Les positions invalides T-31, T-32, T-33, T-41, T-42 et T-43 de la première table d'entrelacement T sont ignorées pour le chargement des éléments binaires b1 à b26. On obtient ainsi la première table d'entrelacement T comprenant les secondes tables d'entrelacement T1 et T2, prêtes pour une opération d'entrelacement visant à répartir les données chargées (éléments binaires b1 à b26) en plusieurs groupes de données attribués chacun à une bande fréquentielle disjointe. Après l'opération globale d'entrelacement, l'élément binaire b22 occupe par exemple la position occupée par l'élément binaire b1 avant l'entrelacement, l'élément binaire b24 occupe par exemple la position occupée par l'élément binaire b2 avant l'entrelacement, l'élément binaire b23 occupe par exemple la position occupée par l'élément b5 avant l'entrelacement, ..., et ainsi de suite. L'entrelacement ayant été réalisé dans des lignes et des colonnes entières de la première table d'entrelacement T, il en résulte que des positions invalides peuvent comprendre des éléments binaires suite à l'entrelacement. Selon le mode de réalisation, ces éléments sont alors déplacés vers des positions valides de la première table d'entrelacement T.

Selon un mode de réalisation, ces déplacement sont réalisés en parcourant les positions invalides de la table T' de haut en bas et de gauche à droite. Dès qu'une position invalide comprend un élément binaire bi, celui-ci est déplacé vers la première position valide disponible rencontrée en parcourant la première table d'entrelacement T de haut en bas et de gauche à droite.

Astucieusement, chacune des secondes tables d'entrelacement T1 et T2 comprend un groupe d'éléments binaires des données réparties en groupes correspondant chacun à une bande fréquentielle disjointe comprise dans la bande fréquentielle étendue. En d'autres termes et selon l'exemple décrit, les éléments binaires compris dans la seconde table d'entrelacement T1 sont transmis au premier modulateur en vue d'une transmission en BPSK dans une première bande fréquentielle disjointe de la bande étendue, et les éléments binaires compris dans la seconde table d'entrelacement T2 sont transmis au second modulateur en vue d'une transmission en QPSK dans une deuxième bande fréquentielle disjointe de la bande étendue. Chacune des colonnes des secondes tables d'entrelacement correspond à une sous porteuse de la bande fréquentielle attribuée au groupe de données. Ainsi, l'entrelacement opère également une répartition des données de chaque groupe sur les différentes sous porteuses de la bande fréquentielle utilisée pour la transmission des données du groupe.

Selon un mode de réalisation, les éléments binaires sont respectivement transmis par le biais de flux sériels vers les modulateurs, via des zones mémoires tampons (encore appelées buffers ou registres). Selon une variante, les éléments binaires sont transmis de fait vers des buffers d'entrée respectivement associés aux modulateurs, les buffers d'entrée des modulateurs étant directement les secondes tables d'entrelacement T1 et T2.

La Fig.3 illustre en réalité la répartition en groupes de la première table d'entrelacement T en deux secondes tables d'entrelacement T1 et T2 après les opérations d'entrelacement et de traitement (déplacement) des éléments binaires présents à des positions invalides, le cas échéant. Cette décomposition correspond avantageusement à la fin de l'entrelacement utile à la répartition des données à transmettre dans la bande fréquentielle étendue, dans les deux bandes fréquentielles disjointes utilisées selon l'exemple décrit.

La décomposition illustrée de la première table d'entrelacement T en deux secondes tables d'entrelacement T1 et T2, au terme de l'entrelacement, constitue une orientation des données sous forme d'éléments binaires de chacun des groupes de données (donc de chacune des secondes tables d'entrelacement T1 et T2) vers une circuiterie électronique configurée pour moduler et transmettre les éléments binaires. La circuiterie électronique dédiée à chacune des bandes fréquentielles disjointes comprend notamment le modulateur opérant pour une transmission dans cette bande fréquentielle disjointe.

Si le mode de réalisation décrit ci-avant illustre une transmission en bande fréquentielle étendue comprenant deux bandes fréquentielles disjointes, le raisonnement est similaire pour ce qui concerne une répartition de données à transmettre dans trois, quatre ou plus encore de bandes fréquentielles disjointes. Ainsi la première table d'entrelacement T (la plus grande) comprend autant de secondes tables d'entrelacement T1, T2, Ti que de bandes fréquentielles disjointes comprises dans la bande fréquentielle étendue. Selon un mode de réalisation préféré, les secondes tables d'entrelacement T1, T2, Ti, dont les dimensions respectives sont définies selon le type de modulation utilisé sur chacune des bandes fréquentielles disjointes comprises dans la bande fréquentielle étendue, sont concaténées de sorte que la table qui comprend les sous porteuses les plus basses soit positionnée à gauche dans la première table d'entrelacement T, et la table qui comprend les sous porteuses les plus hautes soit positionnée à droite dans la première table d'entrelacement. Les éventuelles secondes tables d'entrelacement intermédiaires sont disposées de gauche à droite, par ordre de fréquence croissante des sous porteuses qu'elles comprennent. En outre, les premières lignes de chacune des secondes tables T1, T2, Ti sont alignées en première ligne supérieure de la première table d'entrelacement T.

Bien évidemment, la représentation matricielle des tables d'entrelacement T, T1, T2 et de la table T' a vocation à simplifier la compréhension de l'agencement des données pour les opérations d'entrelacement décrites, et chacune des tables pourrait être représentée sous forme d'un vecteur d'éléments binaires, par exemple horizontal ou vertical comprenant des segments délimitant les lignes et les colonnes précédemment décrites. La représentation des positions des éléments binaires traités peut être quelconque, pour peu que les opérations réalisées sur les éléments binaires correspondent aux principes d'entrelacement précédemment décrits. En effet, les positions des éléments binaires dans les tables correspondent classiquement à des cellules de registres, ou de mémoire vive d'une circuiterie électronique d'entrelacement.

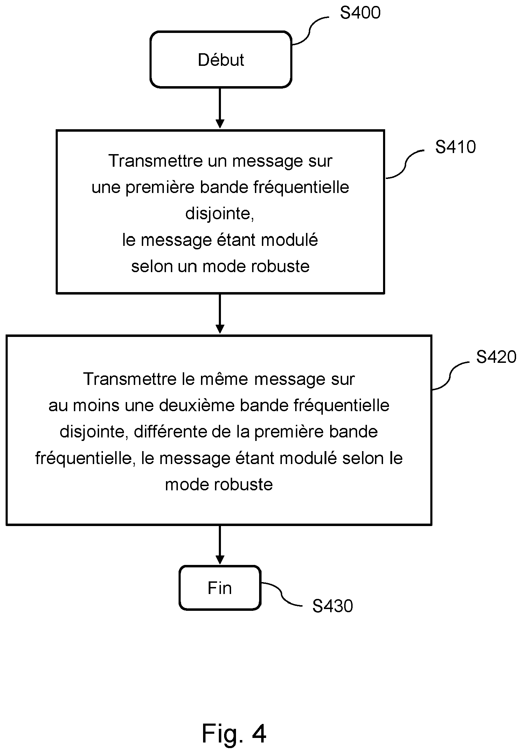

La **Fig. 4** illustre un procédé de transmission d'un message M ou d'une trame de données dans un mode de communication hyper robuste dit « H-ROBO », selon un deuxième mode de réalisation. Le message M doit être transmis selon le mode H-ROBO par un dispositif noeud source (par exemple le dispositif noeud 133) à un dispositif noeud destinataire appartenant à son voisinage réseau (par exemple le dispositif noeud 134). Dans ce mode de réalisation, les deux dispositifs noeuds 133 et 134 sont configurés pour opérer des communications en mode multi-bandes et ont opéré des échanges protocolaires aboutissant à un choix de communication en mode de communication hyper robuste H-ROBO.

Le procédé démarre lors d'une étape **S400.** Lors d'une étape **S410,** le dispositif noeud source 133 transmet au dispositif noeud destinataire 134 le message M sur une première bande fréquentielle disjointe parmi la pluralité de bandes fréquentielles disjointes comprenant au moins deux bandes fréquentielles, le message M étant modulé selon le mode de communication robuste.

Lors d'une étape **S420,** le dispositif noeud source 133 transmet au dispositif noeud destinataire 134 le même message M sur une seconde bande fréquentielle disjointe parmi la pluralité de bandes fréquentielles disjointes, le message M étant, là encore, modulé selon le mode robuste. Il est à noter que la seconde bande fréquentielle disjointe est différente de la première bande fréquentielle disjointe.

Les première et seconde bandes fréquentielles disjointes sont par exemple sélectionnées dans une pluralité de bandes fréquentielles disjointes définies dans la norme G3-PLC, i.e. CENELEC A, CENELEC B, et ARIB ou FCC. Selon une variante, les première et seconde bandes fréquentielles disjointes sont sélectionnées dans un sous-ensemble des bandes fréquentielles définies dans la norme G3-PLC, le sous-ensemble comprenant au moins deux bandes fréquentielles disjointes parmi toutes les bandes définies dans la norme G3-PLC.

Le procédé se termine lors d'une étape S430.

Le mode hyper-robuste H-ROBO utilise donc différentes bandes fréquentielles disjointes en transmettant un même message M, ou une trame de données, simultanément sur ces différentes bandes fréquentielles. Dans chaque bande fréquentielle, le mode robuste est utilisé. De manière avantageuse, le mode hyper-robuste est utilisé quand la communication entre des noeuds voisins est difficile, e.g. quand une valeur d'un indicateur de qualité LQI pour le lien en question est inférieure à une valeur de seuil prédéterminée.

Le dispositif noeud source 133 et le dispositif noeud destinataire 134 se basent en effet chacun sur des valeurs de LQI reçues dans des informations *tone map response* telles que définies dans la norme G3-PLC pour choisir un mode de transmission parmi les modes de communications multi-bande (en mode ROBO dans chaque bande) ou bien en mode hyper-robuste, et peuvent donc opter pour des modes de communications différents. Dans ce cas, l'un des dispositifs noeuds doit adapter son mode de transmission de sorte qu'il soit alors compatible avec le mode de configuration choisi par l'autre noeud. Ainsi, il doit être capable de passer du mode de transmission multi-bande par fragmentation avec modulation de type ROBO dans chaque bande au mode hyper-robuste, s'il détecte que l'autre dispositif noeud communique en mode hyper-robuste H-ROBO.

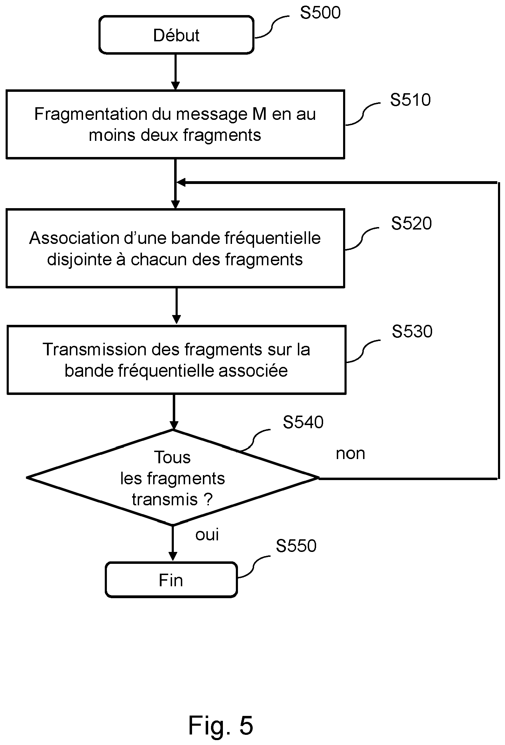

La **Fig. 5** illustre schématiquement un procédé de transmission d'un message selon un troisième mode de réalisation. Un message M doit être transmis par un dispositif noeud source (par exemple le dispositif noeud 133) à un dispositif noeud destinataire appartenant à son voisinage réseau (par exemple le dispositif noeud 134). Ce mode de réalisation est décrit notamment en lien avec la norme de communication G3-PLC. Toutefois, il ne se limite pas à cette seule norme et pourrait être appliqué à d'autres normes, e.g. aux spécifications PRIME (pour « PoweRline Intelligent Metering Evolution » en anglais), c'est-à-dire notamment dans un réseau de communication par courants porteurs en ligne qui ne présente pas de structure maillée mais qui présente une structure en arbre. Le procédé démarre à une étape S500. Lors d'une étape **S510,** le message M, qui est par exemple encapsulé dans un paquet IP, e.g. un paquet IPv6 (paquet de taille jusqu'à 1500 octets), est fragmenté en au moins deux fragments afin de l'adapter aux contraintes de la couche MAC, et notamment à la taille des trames MAC.

A cet effet, la norme G3-PLC incorpore le protocole 6LoWPAN, lequel permet d'adapter des paquets de données IPv6 aux contraintes de la norme de communication G3-PLC, notamment en les fragmentant. En effet, les trames MAC utilisées par la norme G3-PLC sont de tailles bien inférieures aux paquets IPv6 de 1500 octets (soit 400 octets disponibles au maximum par paquet pour la partie IP).

La couche adaptation de 6LoWPAN se situe entre la couche réseau et la sous-couche MAC du modèle OSI. Elle reçoit de la couche réseau des paquets IPv6 de 1 280 octets et le cas échéant les fragmente. Bien entendu, dans le cas d'un paquet IPv6 suffisamment petit pour être contenu dans une seule trame MAC G3-PLC, aucune fragmentation n'est effectuée. Le procédé s'applique donc dans le cas où le message M présente une longueur telle qu'il requiert d'être fragmenté.

Chaque fragment est généralement précédé d'un en-tête de fragmentation, par exemple un en-tête comprenant 4 ou 5 octets. Cet en-tête contient par exemple les informations suivantes Cinq bits permettant d'identifier qu'il s'agit d'un fragment. Le premier fragment aura la valeur « 11000 » et les suivants « 11100 » ; onze bits pour indiquer la taille du paquet IP avant fragmentation (champ « datagram_size ») ; seize bits pour indiquer un identifiant (champ « datagram_tag ») commun à tous les fragments d'un même paquet IP ; et huit bits pour indiquer la position (champ « datagram_offset ») du fragment dans le paquet IP (uniquement présent dans les fragments suivant le premier). Il est à noter que la fragmentation est décrite dans la section 5.3 de la recommandation RFC 4944 (publiée en septembre 2007).

Lors d'une étape **S520,** une première bande fréquentielle disjointe est associée à un premier fragment parmi lesdits au moins deux fragments issus de la fragmentation du message M, et une seconde bande fréquentielle disjointe, différente de la première bande fréquentielle, est associée à l'autre desdits au moins deux fragments. Les premières et secondes bandes fréquentielles associées sont par exemple sélectionnées parmi la pluralité de bandes fréquentielles définies dans la norme de communication G3-PLC, i.e. CENELEC A, CENELEC B, et ARIB ou FCC. Selon une variante, les premières et secondes bandes fréquentielles disjointes associées sont sélectionnées dans un sous-ensemble des bandes fréquentielles définies dans la norme de communication G3-PLC, le sous-ensemble comprenant au moins deux bandes parmi toutes les bandes autorisées par G3-PLC. Ainsi, selon l'invention, des fragments issus d'un même paquet IP peuvent être associés en vue de leur transmission à des bandes fréquentielles différentes.

Le mode de réalisation décrit pour deux fragments peut être étendu à des cas pour lesquels plus de deux fragments sont définis, e.g. N fragments où N est un entier naturel. Dans ce cas, une même bande fréquentielle disjointe peut être associée à différents fragments. Cependant, des bandes fréquentielles disjointes différentes sont alors associées à au moins deux fragments du message M parmi les N fragments.

Dans un mode de réalisation particulier, les bandes fréquentielles disjointes sont associées de manière alternative aux fragments. Par exemple, dans le cas où deux bandes fréquentielles sont à associer, la première bande fréquentielle est associée aux fragments impairs (i.e. les fragments 1, 3, 5, etc.) et la seconde bande fréquentielle est associée aux fragments pairs (i.e. les fragments 2, 4, 6, etc.). Dit autrement, deux fragments qui se suivent dans le message M sont transmis dans des bandes fréquentielles disjointes différentes.

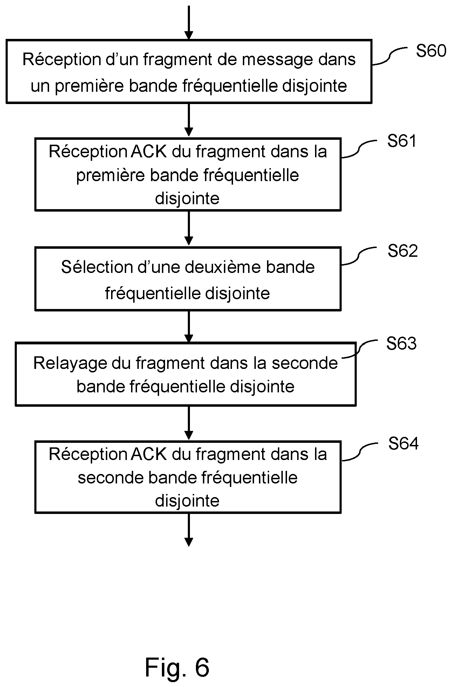

Lors d'une étape **S530,** le fragment est transmis sur la bande fréquentielle qui lui est associée. Ainsi, les différents fragments peuvent avantageusement être transmis en parallèle sur des bandes fréquentielles différentes. La transmission d'un fragment sur le médium, i.e. sur la ligne de courant, comprend classiquement différentes étapes, notamment une segmentation des fragments afin de les adapter à la couche physique et une modulation OFDM du signal. La segmentation consiste à partitionner une trame MAC (acronyme anglais de « Media Access Control ») en PSDUs (acronyme anglais de « PHY Service Data Unit »). Tous les PSDU issus d'un même fragment sont modulés en utilisant un même schéma de modulation. Lors d'une étape **S540,** si tous les fragments ont été transmis, alors le procédé est terminé (**S550**). Sinon, le procédé reprend à l'étape S520 avec le prochain fragment à transmettre. La **Fig. 6** illustre schématiquement un procédé de relayage d'un message M reçu par le premier dispositif noeud 133 depuis un troisième dispositif noeud vers le deuxième dispositif noeud 134, selon un quatrième mode de réalisation. Selon ce quatrième mode de réalisation, au moins deux bandes fréquentielles disjointes sont utilisées dans une même zone géographique déterminée. Selon un mode de réalisation, l'algorithme décrit par l'ordinogramme de la Fig.6 est susceptible d'être exécuté par chacun des dispositifs noeuds du réseau de communication 120.

Le présent algorithme est ainsi décrit ci-après selon un exemple dans lequel il est exécuté par le premier dispositif noeud 133, le second dispositif noeud étant le dispositif noeud 134 et le troisième dispositif noeud étant le dispositif noeud 137.

A l'étape **S60**, le dispositif noeud 133 reçoit du dispositif noeud 137 un fragment dans une première bande fréquentielle disjointe. La transmission d'un fragment sur le médium, i.e. sur la ligne de courant, comprend classiquement différentes étapes notamment une segmentation des fragments afin de les adapter à la couche physique et une modulation OFDM du signal. La segmentation consiste à partitionner une trame MAC (acronyme anglais de « Media Access Control ») en PSDUs (acronyme anglais de « PHY Service Data Unit »). Tous les PSDU issus d'un même fragment sont modulés en utilisant un même schéma de modulation.

Lors d'une étape **S61**, le dispositif noeud 133, après démodulation et décodage du fragment reçu selon le schéma de démodulation et de décodage de la première bande fréquentielle, disjointe, émet un message d'acquittement au dispositif noeud 137. Lors d'une étape **S62**, le dispositif noeud 133 sélectionne, parmi l'ensemble des bandes fréquentielles disjointes, une deuxième bande fréquentielle, différente de la première bande fréquentielle et qui est une bande fréquentielle sur laquelle le deuxième dispositif noeud 134 est apte à émettre et recevoir des messages. Puis, lors d'une étape **S63**, le premier dispositif noeud 133 relaie le fragment reçu du troisième dispositif noeud 137 vers le deuxième dispositif noeud 134, après avoir opéré une modulation et un codage du fragment décodé et démodulé, selon le schéma de codage et de modulation de la bande fréquentielle disjointe sélectionnée.

Finalement, lors d'une étape **S64**, le premier dispositif noeud 133 reçoit un message d'acquittement du deuxième dispositif noeud 134, destinataire du message relayé.

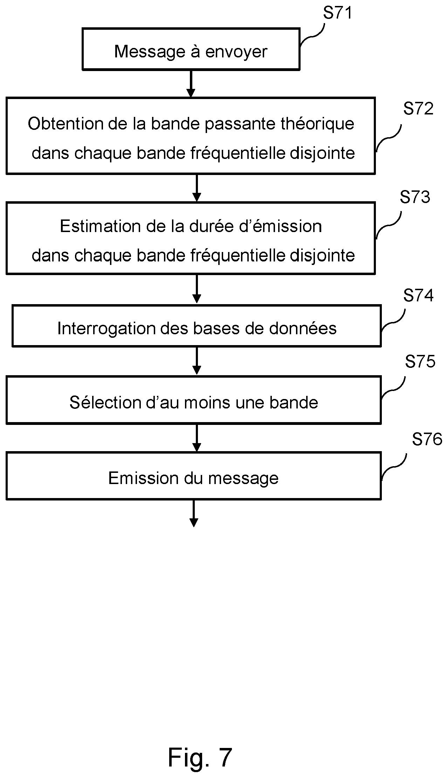

La **Fig. 7** illustre schématiquement un procédé de sélection d'au moins une bande fréquentielle du réseau de communication pour l'émission d'un message selon un cinquième mode de réalisation. Le procédé décrit ici peut être exécuté à chaque envoi d'un message M par chaque dispositif noeud qui est apte à émettre et recevoir des messages sur plusieurs bandes fréquentielles disjointes du réseau de communication 120.

Les bandes fréquentielles disjointes associées sont par exemple sélectionnées dans la pluralité de bandes fréquentielles disjointes définies dans la norme de communication G3-PLC, i.e. CENELEC A, CENELEC B, et ARIB ou FCC.

Lors d'une étape **S71,** un dispositif noeud, par exemple le dispositif noeud 133, a un message à envoyer sur le réseau de communication 120. Lors d'une étape **S72,** le dispositif noeud 133 obtient un débit théorique pour chacune des bandes fréquentielles disjointes sur laquelle le dispositif noeud 133 est apte à émettre et recevoir des messages. Comme mentionné précédemment, chaque bande fréquentielle disjointe présente, pour chaque type de modulation utilisée dans cette bande fréquentielle disjointe, un débit théorique déterminé. Le dispositif noeud 133 obtient le débit théorique de chaque bande fréquentielle sur laquelle le dispositif noeud 133 est apte à émettre et recevoir des messages correspondant à la modulation utilisée pour l'envoi du message au noeud vers lequel le message doit être transféré. Lors d'une étape **S73,** le dispositif noeud 133 estime, pour chacune des bandes fréquentielles disjointes, la durée d'émission théorique du message dans cette bande fréquentielle disjointe, puis lors d'une étape **S74,** le dispositif noeud 133 interroge une base de données pour obtenir des résultats d'intégration de taux d'occupation de la bande fréquentielle disjointe correspondant à la durée d'émission théorique du message dans chaque bande fréquentielle. Ainsi, le dispositif noeud 133 obtient, pour chaque bande fréquentielle disjointe, un nombre de résultats d'intégration pendant une première échelle de temps correspondant à la durée d'émission théorique du message dans la bande fréquentielle disjointe concernée. Le dispositif noeud 133 obtient aussi un nombre de résultats d'intégration pendant une deuxième échelle de temps correspondant à l'heure à laquelle le message doit être envoyé. Le dispositif noeud 133 obtient enfin un nombre de résultats d'intégration pendant une troisième échelle de temps correspondant au jour auquel le message doit être envoyé.

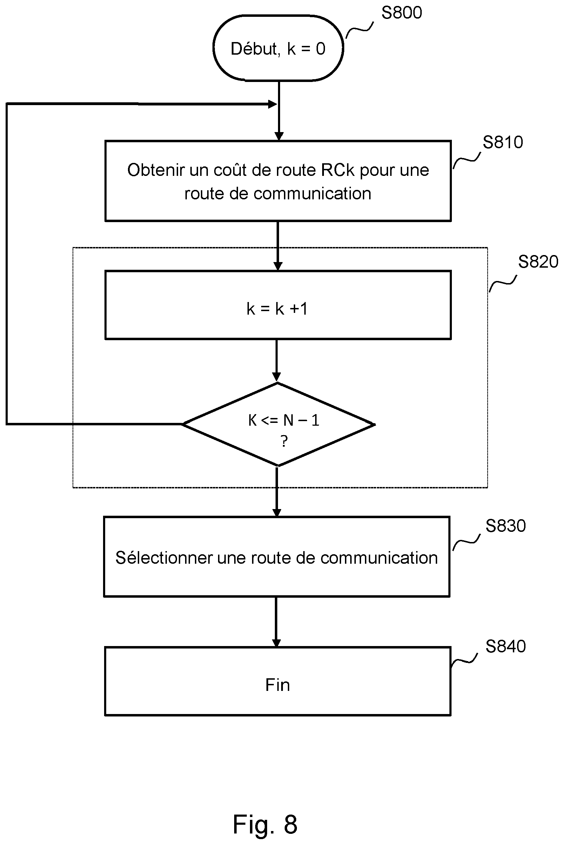

Lors d'une étape **S75,** le dispositif noeud 133 sélectionne la bande fréquentielle disjointe parmi les bandes fréquentielles disjointes pour laquelle les résultats d'intégration de taux d'occupation sont les plus faibles. Par exemple, le dispositif noeud 133 calcule, pour chaque bande fréquentielle disjointe, la moyenne des résultats d'intégration pendant les première, deuxième et troisième échelles de temps et sélectionne la bande fréquentielle disjointe pour laquelle la moyenne calculée est la plus faible. Selon une variante, un coefficient de pondération est affecté aux résultats d'intégration pendant les première, deuxième et troisième échelles de temps avant le calcul de la moyenne. A titre d'exemple, un coefficient de pondération de 10 est affecté aux résultats d'intégration pendant la première échelle de temps, un coefficient de pondération de 12 est affecté aux résultats d'intégration pendant la deuxième échelle de temps et un coefficient de pondération de 7 est affecté aux résultats d'intégration pendant la troisième échelle de temps. Finalement, lors d'une étape, le dispositif noeud 133 transfère le message dans la bande fréquentielle disjointe sélectionnée. La **Fig. 8** illustre schématiquement un procédé de sélection d'une route de communication entre un premier dispositif noeud et un second dispositif noeud du réseau de communication 120, de type réseau maillé d'alimentation électrique utilisant des communications par courants porteurs en ligne, selon un sixième mode de réalisation.

Le second dispositif noeud, e.g. le noeud 132, est atteignable depuis le premier dispositif noeud, e.g. 133, par au moins une première route de communication, e.g. la route passant par les noeuds 130, 131 et une seconde route de communication, e.g. la route passant par les noeuds 134, 135 et 136, différente de ladite première route de communication. De manière générale, le second dispositif noeud est atteignable depuis le premier dispositif noeud par une pluralité de N routes de communication, N étant un entier positif. Dans la suite, pour faciliter les notations, chaque route possible est identifiée par un indice k avec k nombre entier variant de 0 à N-1.

Le procédé démarre à une étape S800 où k est égal à zéro.

Lors d'une étape S810, le second dispositif noeud obtient un coût de route RCk pour une route de communication d'indice k parmi la pluralité de N routes de communication. Le coût de route $RC_k$ est égal à la somme des coûts de liens $LC_{i,j}$ entre deux dispositifs noeuds successifs i et j, i.e. situés dans le même voisinage réseau. Par exemple, dans le cas de la première route de communication, le coût de la route $RC_i = L_{133,130} + L_{130,131} + L_{131,132}$ et le coût $RC_2$ de la seconde route de communication sont égaux à $L_{133,134} + L_{134,135} + L_{135,136} + L_{136,132}$. Le coût d'un lien $LC_{i,j}$ entre deux dispositifs noeuds successifs est fonction de la valeur maximale parmi un coût du lien $LC_{i \rightarrow j}$ dans la direction avant, i.e. du dispositif noeud émetteur vers le dispositif noeud récepteur, et un coût du lien $LC_{j \rightarrow i}$ dans la direction arrière, i.e. du dispositif noeud récepteur vers le dispositif noeud émetteur.

Ainsi, dans un mode particulier de réalisation, le coût du lien $LC_{i,j}$ entre un dispositif noeud i et un dispositif noeud j appartenant à son voisinage réseau est égal à une somme pondérée entre une valeur maximale parmi un coût du lien dans une direction avant $LC_{i \rightarrow j}$ et un coût du lien dans une direction arrière $LC_{j \rightarrow i}$ et un rapport entre un nombre de routes actives et un nombre maximal de routes actives. Par exemple, le coût du lien $LC_{i,j}$ est calculé comme suit :

$$LC_{i,j} = max\big(LC_{i \rightarrow j}, LC_{j \rightarrow i}\big) + adpKrt * \frac{NumberOfActiveRoutes}{MaximumNumberOfActiveRoutes} + adpKh$$

où $LC_{i \rightarrow j}$ and $LC_{j \rightarrow i}$ sont les coûts des liens directionnels (directions avant et arrière, respectivement) entre le dispositif noeud i et le dispositif noeud j ;

max(a,b) est une fonction qui retourne la valeur a si a>b et b sinon, *NumberOfActiveRoutes* est le nombre de routes actives dans la table de routage interne du dispositif noeud j ;

*MaximumNumberOfActiveRoutes* est le nombre maximal de routes actives dans la table de routage interne du dispositif noeud j ;

adpKh est un facteur de pondération (« weight » en anglais) représentatif du coût d'un saut; et adpKrt est un facteur de pondération associé au nombre de routes actives dans la table de routage du dispositif noeud j.

A titre d'exemple, adpKrt a pour valeur 0 et adpKh a pour valeur 4.

Il est à noter que la valeur adpKh s'ajoute à chaque étape S810. A la fin, le second dispositif noeud pourra comparer les routes potentielles, et définir une préférence pour celle qui présente le moins de sauts.

Selon un mode de réalisation particulier, une métrique spécifique est définie pour déterminer les coûts des liens directionnels afin de s'adapter à des dispositifs noeuds qui présentent des capacités de transmission de type multibandes. Un dispositif noeud a des capacités multi-bandes dans le cas où il est configuré pour pouvoir utiliser simultanément plusieurs bandes fréquentielles disjointes, e.g. CENELEC-A et FCC, au lieu de choisir et d'opérer dans une bande fréquentielle disjointe unique. Par exemple, le dispositif noeud en question peut fragmenter le message en différents fragments selon le protocole 6LoWPAN. Le procédé de fragmentation est plus particulièrement décrit dans la section 5.3 de la recommandation RFC 4944 (publiée en septembre 2007). Chaque fragment est alors envoyé indépendamment des autres fragments sur des bandes fréquentielles qui peuvent être différentes. Les bandes fréquentielles associées sont par exemple sélectionnées dans l'ensemble des bandes fréquentielles autorisées par G3-PLC, i.e. CENELEC A, CENELEC B, ARIB et FCC. Dans une variante, les premières et secondes bandes fréquentielles associées sont sélectionnées dans un sous-ensemble des bandes fréquentielles autorisées par G3-PLC, le sous-ensemble comprenant au moins deux bandes parmi toutes les bandes autorisées par G3-PLC.

Dans un autre mode de réalisation, un dispositif noeud ayant des capacités multi-bandes peut transmettre le même message simultanément dans toutes les bandes fréquentielles de l'ensemble de bandes fréquentielles prises en charge (par l'émetteur et le récepteur). Ce mode de transmission est appelé dans la suite le mode hyper-robuste. Dans chaque bande fréquentielle, le mode robuste de G3-PLC est alors utilisé. De cette façon, en cas de large perturbation fréquentielle sur une bande fréquentielle, le message peut malgré tout parvenir à passer sur une autre bande fréquentielle. En effet, le récepteur n'a besoin de réussir à capter le message que sur une seule des bandes fréquentielles sur lesquelles il a été émis. Le mode hyper-robuste est un mode particulier nouvellement défini pour le cas de dispositifs noeuds ayant des capacités multi-bandes.

Dans un autre mode de réalisation, un dispositif noeud ayant des capacités multi-bandes peut transmettre un message sur l'ensemble des bandes fréquentielles, lesquelles constituent alors une bande fréquentielle dite étendue.

Dans tous ces modes de réalisation, la capacité multi-bandes d'un dispositif noeud est caractérisée par le fait que le noeud est capable d'exploiter plusieurs bandes fréquentielles simultanément au lieu d'une seule et unique bande comme c'est le cas classiquement dans le cas de la norme G3-PLC. Un dispositif ayant des capacités multi-bandes peut bénéficier des caractéristiques des différentes bandes fréquentielles en termes de débit, portée, résistance aux perturbateurs.

Le coût de route tel que défini par G3-PLC dans son annexe D ne permet pas de tenir compte de ces capacités multi-bandes de dispositif noeud. En effet, la norme de communication G3-PLC ne permet l'utilisation que d'une seule bande fréquentielle pour un réseau donné. Selon un mode de réalisation particulier, le coût du lien $LC_{i \rightarrow j}$ dans une direction donnée, i.e. dans la direction avant ou arrière, dépend du coût du lien, dans ladite direction donnée, calculé pour chaque bande fréquentielle $LC_{i \rightarrow j}$ [m] de l'ensemble de bandes fréquentielles utilisé par lesdits deux dispositifs noeuds successifs i et j pour communiquer, ledit ensemble comprenant au moins deux bandes fréquentielles différentes.

L'indice k est incrémenté de 1 et comparé à N-1 lors d'une étape S820, k est incrémenté de 1 et comparé à N-1. Si k est inférieur ou égal à N-1 alors le procédé continue à l'étape S810, sinon il continue à l'étape S830.

Lors d'une étape S830, le second dispositif noeud sélectionne, parmi lesdites N routes de communication, la route de communication correspondant au coût de route le plus petit. Le procédé de la Fig. 8 se termine à l'étape S840.

Selon ce mode de réalisation, un coût $LC_{i\to j}$ d'un lien directionnel entre un premier dispositif noeud et un second dispositif noeud est calculé à partir d'un coût $LC_{i\to j}$ [m] de lien directionnel par bande fréquentielle disjointe, m étant un indice identifiant la bande fréquentielle, et m est un entier variant de 0 à NBP-1, où NBP est un entier égal au nombre de bandes fréquentielles disjointes utilisables. Par exemple, NBP peut être égal à 4. Selon un exemple, un indice m égal à 0 correspond à la bande CENELEC-A, un indice m égal à 1 correspond à la bande FCC, un indice m égal à 2 correspond à la bande CENELEC-B et un indice m égal à 3 correspond à la bande ARIB.

Ce procédé commence à une étape **S8100** lorsque m a une valeur nulle.

Lors d'une étape **S8110** suivante, le coût de lien $LC_{i\to j}$[m] est calculé comme suivant :

$$LC_{i\to j}[m] = adpKr * MOD_{Kr} + adpKm * MOD_{Km}$$
$$+adpKc[m] * \frac{(MaximumNumberOfTones - NumberOfActiveTones)}{MaximumNumberOfTones}$$
$$+adpKq * MAX\left(0, MIN\left(1, \frac{adpHighLQIValue - LQI}{adpHighLQIValue - adpLowLQIValue}\right)\right)$$

où :

- $MOD_{Kr}$ = 1 pour le mode robuste et 0 pour les autres modulations,
- $MOD_{Km}$ = 3 pour les modulations DBPSK or BPSK (y compris le mode robuste), 2 pour les modulations DQPSK ou QPSK, 1 pour les modulations D8PSK ou 8-PSK et 0 pour les modulations. 16-QAM,
- adpKr, adpKm, adpKq sont des facteurs de pondération dont les valeurs sont prédéfinies ;
- adpKr est un facteur de pondération associé au mode robuste ;

  - adpKm est un facteur de pondération associé à la modulation ; et

- adpKc[m] est un facteur de pondération défini pour chaque bande fréquentielle et est associé au nombre de sous-porteuses actives par rapport au nombre total de sous-porteuses disponibles.

A titre d'exemple illustratif, adpKc[0]= 2 et adpKc[1]= 1, adpKc[0] étant associé à la bande CENELEC-A et adpKc[1] étant associé à la bande FCC. En effet, la bande FCC offre plus de sous-porteuses que la bande CENELEC-A, il est donc logique d'avoir un adpKc[1] inférieur au adpKc[0] pour le prendre en compte et ainsi obtenir un résultat comparable entre les différentes bandes.

- LQI (acronyme anglais de « Link Quality Indicator ») est une valeur représentative de la qualité du lien entre les dispositifs noeuds i et j, le noeud j étant le noeud courant ;
- *adpHighLQIValue* est une valeur représentative d'un seuil au-dessus duquel une valeur de LQI est considérée comme traduisant un lien considéré comme étant « fiable » ;
- *adpLowLQIValue* est une valeur représentative d'un seuil en-dessous duquel une valeur de LQI est considérée comme traduisant un lien considéré comme étant « non fiable » ;
- adpKq est un facteur de pondération associé à l'indicateur LQI ;
- MaximumNumberOfTones est le nombre de tonalités/sous-porteuses disponibles, e.g. MaximumNumberOfTones est égal à 36 pour CENELEC-A et 72 pour FCC. Une carte des tonalités (« tone map » en anglais) est une liste de sous-porteuses utilisées pour communiquer dans une bande fréquentielle disjointe donnée. Ces sous-porteuses sont choisies pour subir le moins d'interférences possibles au vu de l'environnement ; et
- NumberOfActiveTones est le nombre de tonalités/sous-porteuses actives. Il est à noter que la carte des tonalités indique un nombre de « groupes de sous-porteuses » actives (par un positionnement de bits à 1 correspondants). Le nombre de sous-porteuses actives est obtenu en multipliant ce nombre de « groupes de sous-porteuses » par le nombre de sous-porteuses par groupe, e.g. 3 en FCC et 6 en CENELEC-A.

Il est à noter également que les valeurs des différents paramètres adpX, avec X=Kq, HighLQIValue, LowLQIValue, Kc[m], etc, mentionnés peuvent être ajustées en fonction de l'expérience du terrain et transmises via la couche applicative des équipements. Certaines de ces valeurs peuvent être égales à 0.

Lors d'une étape **S8120,** m est incrémenté de 1 et comparé au nombre NBP-1. Si m est inférieur ou égal à NBP-1 alors le procédé continue à l'étape **S8110,** sinon il continue en séquence à une étape **S8130.**

Une fois que le coût d'un lien $LC_{i \to j}[m]$ est calculé pour toutes les bandes fréquentielles disjointes utilisables, la valeur la plus petite $Min\_LC_{i \to j}$ est déterminée lors d'une étape **S8130**. $Min\_LC_{i \to j}$ correspond à m=m$_0$ i.e. $Min\_LC_{i \to j}$= $LC_{i \to j}[m_0]$.

Lors d'une étape **S8140** postérieure à l'étape 8130, le coût directionnel $LC_{i \to j}$ global est calculé.

Selon un premier mode de réalisation, pour chaque $LC_{i \to j}[m]$ différent de $Min_{LC_{i \to j}}$, sa contribution à l'amélioration du coût de lien directionnel global (i.e. $LC_{i \to j}$) est calculée en utilisant la formule suivante : $\dfrac{Min_{LC_{i \to j}} * adpKmb}{LC_{i \to j}[m] * 255}$ .

Le coût directionnel $LC_{i \to j}$ global est donc calculé comme suit :

$$LC_{i \to j} = adpKhr * MOD_{Khr} + \frac{Min_{LC_{i \to j}}}{1 + \sum_{m=0, m \neq m0}^{NBP-1} \left( \frac{Min_{LC_{i \to j}} * adpKmb}{LC_{i \to j}[m] * 255} \right)} \text{ (Eq. 1)}$$

où :

- $MOD_{Khr}$ = 1 pour le mode hyper-robuste, 0 sinon ;

- adpKhr est un facteur de pondération associé au mode hyper-robuste dans le calcul du coût de lien, e.g. adpKhr = 4 ;
- adpKmb est un facteur de pondération pour le calcul de route dans le cas multi-bandes, e.g. adpKmb = 130.

Pour illustrer numériquement le résultat de ce premier mode de réalisation, prenons par exemple le cas d'un $LC_{i \to j}[0]$=50 pour la bande CENELEC-A et $LC_{i \to j}[1]$=100 pour la bande FCC (sans mode hyper-robuste). Soit un facteur de pondération faible adpKmb=55, le $LC_{i \to j}$ global est alors égal à 50 / (1 + 50/100*55/255) = 45 (en arrondissant).

L'ajout de la bande FCC, même avec un coût de route élevé, permet donc d'améliorer le coût de route par rapport au cas CENELEC-A seul, mais de façon modérée (compte tenu du facteur de bonification faible).

Selon un second mode de réalisation, la formule suivante est utilisée au lieu de la formule donnée par (Eq. 1) pour calculer le coût directionnel $LC_{i \to j}$ global :

$$LC_{i \to j} = adpKhr * MOD_{Khr} + \frac{1}{\sum_{m=0}^{NBP-1} \left( \frac{1}{LC_{i \to j}[m]} \right)} \text{ (Eq. 2)}$$

Cette formule est plus simple que celle de (Eq.1) mais ne permet pas une pondération par le facteur de pondération adpKmb. Pour illustrer numériquement le résultat de ce second mode de réalisation, prenons par exemple le cas d'un $LC_{i \to j}[0]$=50 pour la bande CENELEC-A et $LC_{i \to j}[1]$=100 pour la bande FCC (sans mode hyper-robuste). Le $LC_{i \to j}$ global est alors égal à 1 / (1/50+1/100) = 33 (en arrondissant). L'ajout de la bande FCC, même avec un coût de route élevé, permet donc d'améliorer le coût de route global par rapport au cas CENELEC - A seul.

Dans un mode particulier de réalisation, le mode hyper-robuste n'est pas utilisé dans les équations (1) et (2) et *adpKhr* a une valeur nulle.

Le procédé de calcul se termine ensuite à une étape finale **S8150.**

Les étapes S8100 à S8150 sont répétées pour calculer le coût directionnel global $Lc_{j \to i}$ et ainsi en déduire le coût $LC_{i,j}$.

Les étapes S8100 à S8150 ne sont pas représentées sur la Fig. 8 mais peuvent servir comme références pour une bonne compréhension du procédé de calcul du coût $LC_{i,j}$ d'un lien décrit ci-avant, notamment du fait du rebouclage possible entre les étapes S8120 et S8110.

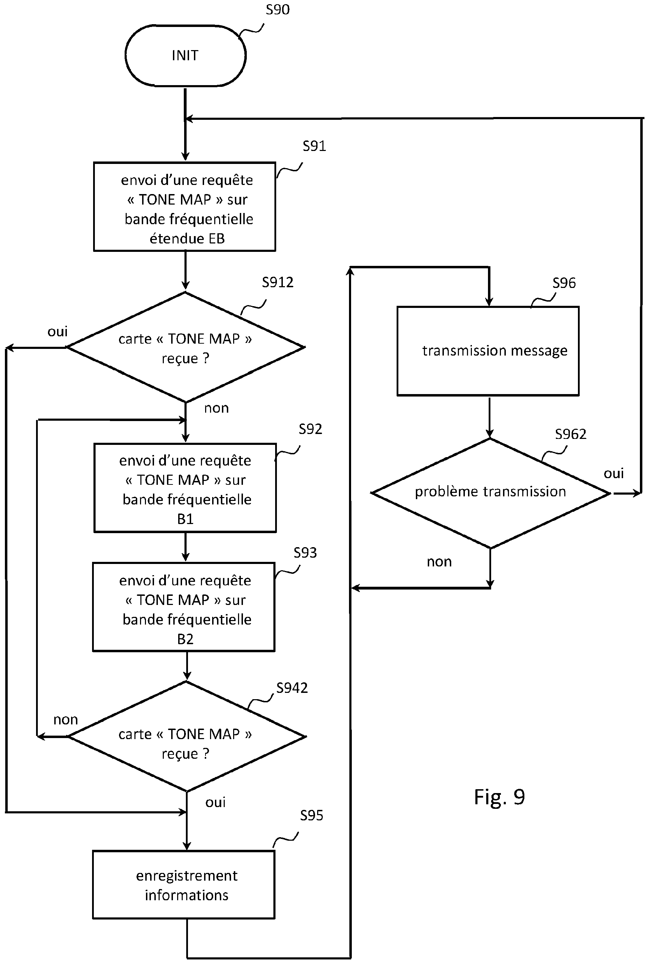

La **Fig. 9** illustre un procédé de détermination d'un mode de communication entre deux dispositifs noeuds voisins l'un de l'autre dans le réseau de communication 120, selon un septième mode de réalisation. Ces dispositifs noeuds sont, à titre d'exemple, le dispositif noeud 133 opérant comme un dispositif noeud initiateur et le dispositif noeud voisin 134, opérant comme un dispositif noeud cible.

Au terme d'une étape d'initialisation S90, les dispositifs noeuds 133 et 134 sont configurés pour communiquer l'un avec l'autre selon au moins un mode de communication dans au moins une bande fréquentielle disjointe. Il est considéré que les dispositifs noeuds 133 et 134 sont alors normalement opérationnels à ce stade et qu'un échange de messages peut être initié.

Selon le mode de réalisation illustré sur la Fig. 9, le dispositif noeud initiateur 133 envoie, à l'étape S91, un message comprenant une information selon laquelle une requête en estimation de canal dans une bande fréquentielle étendue EB est sollicitée vers le dispositif noeud cible, et attend pendant un temps prédéterminé un éventuel message en réponse. Au terme du délai prédéterminé, le dispositif noeud initiateur 133 vérifie à l'étape S912, si une réponse a bien été reçue sous la forme d'un message comprenant des informations représentatives d'une estimation de canal dans la bande fréquentielle EB. Dans l'affirmative, le dispositif noeud initiateur 133 enregistre à l'étape S95 les informations reçues et représentatives d'une estimation de canal dans la bande fréquentielle étendue EB, dans sa table de voisinage NT-REC, et détermine un mode de communication préférentiel, compte tenu notamment des différentes informations disponibles dans la table de voisinage NT-REC. Par exemple, le dispositif noeud initiateur 133 détermine que le mode de communication en bande fréquentielle étendue EB est le mode de communication le plus avantageux à cet instant pour communiquer avec le dispositif noeud cible 134, et initie une transmission dans ce mode là, dans la bande fréquentielle étendue EB, à l'étape S96. Selon le mode de réalisation, en l'absence de réponse de la part du dispositif noeud cible 134 après un temps prédéterminé, le dispositif noeud initiateur 133 considère que le dispositif noeud cible 134 ne supporte pas une communication selon un mode de communication dans la bande étendue et envoie, lors des étapes S92 et S93, des messages comprenant respectivement une requête en estimation de canal dans la bande fréquentielle B1 et une requête en estimation de canal dans la bande fréquentielle B2. Le dispositif noeud initiateur 133 attend alors une éventuelle réponse à l'un au moins de ces deux messages, ou à chacun de ces deux messages, et enregistre les informations représentatives d'une ou plusieurs estimations de canal, reçues en réponse, dans une ou plusieurs tables de voisinage NT-REC, avant que de ne communiquer ultérieurement à l'étape S6. Dans le cas où aucun message n'est reçu en réponse à une requête en estimation de canal émise par le dispositif noeud initiateur, à l'étape S942, le procédé reprend à l'étape S92 et le dispositif noeud initiateur envoie à nouveau des messages au dispositif noeud cible, jusqu'à ce qu'une réponse soit obtenue dans l'une au moins des deux bandes fréquentielles B1 et B2. Un nouveau message comprenant une requête en estimation de canal (indicateur TMR positionné à 1, par exemple, en G3-PLC) peut être envoyé dès lors que des données doivent être transmises au dispositif noeud cible 134.

Lorsque des communications sont établies à l'étape S6, dans un mode de communication déterminé entre les deux dispositifs noeuds, et en l'absence de problème de communication détecté lors d'une étape S962 visant à définir un niveau de qualité de communication, les communications continuent selon le mode de communication sélectionné. A contrario, si un problème de qualité des communications est détecté, le procédé de détermination est relancé à partir de l'étape S91.

Avantageusement, la détermination du mode de transmission comprend une étape de comparaison de premiers indicateurs de qualité de transmission respectivement déterminés, pour chacune des bandes fréquentielles, à partir des informations enregistrées associées à chacune des au moins deux bandes fréquentielles B1 et B2. Dans le cas où les informations reçues, représentatives d'une ou plusieurs estimations de canal indiquent que les bandes fréquentielles disjointes disponibles présentent des perturbations importantes, la détermination du mode de transmission peut comprendre en outre une sélection d'un mode de transmission dit « robuste » utilisant une modulation BPSK et une répétition systématique des bits transmis (par exemple, chaque bit est répété quatre fois ou six fois au cours d'une transmission). La sélection d'un mode de transmission dit « robuste » dépend, par exemple, d'un niveau de qualité de transmission défini à partir d'une estimation d'un canal de transmission établi via une transmission multi-bandes dans lesdites au moins deux bandes fréquentielles B1 et B2.

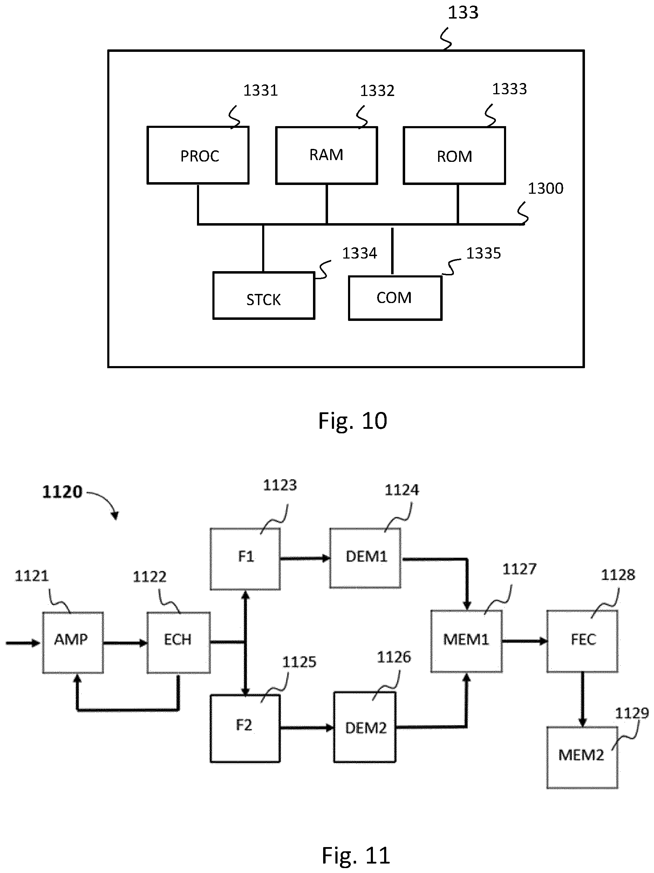

La **Fig. 10** illustre schématiquement un exemple d'architecture interne de tout dispositif noeud du réseau de communication 120. Considérons à titre illustratif que la Fig. 10 illustre un agencement interne du dispositif noeud 133. Un tel dispositif noeud est qualifié de multi-bande car capable de transmettre un message sur plusieurs bandes fréquentielles disjointes utilisées en parallèle. On note que la Fig. 10 pourrait aussi illustrer schématiquement un exemple d'architecture matérielle d'un module de traitement compris dans le dispositif noeud 133.

Selon l'exemple d'architecture matérielle représenté à la Fig. 10, le dispositif noeud 133 comprend alors, reliés par un bus de communication 1300 : un processeur ou CPU (« Central Processing Unit » en anglais) 1331 ; une mémoire vive RAM (« Random Access Memory » en anglais) 1332 ; une mémoire morte ROM (« Read Only Memory » en anglais) 1333 ; une unité de stockage telle qu'un disque dur (ou un lecteur de support de stockage, tel qu'un lecteur de cartes SD (« Secure Digital » en anglais) 1334 ; au moins une interface de communication 1335 permettant au dispositif noeud 133 de communiquer avec les dispositifs noeuds appartenant à son voisinage réseau, tels que, par exemple, les dispositifs noeuds 134 et 137.

Le processeur 1301 est capable d'exécuter des instructions chargées dans la RAM 1332 à partir de la ROM 1333, d'une mémoire externe (non représentée), d'un support de stockage (tel qu'une carte SD), ou d'un réseau de communication. Lorsque le dispositif noeud est mis sous tension, le processeur 1331 est capable de lire de la RAM 1332 des instructions et de les exécuter. Ces instructions forment un programme d'ordinateur causant la mise en oeuvre, par le processeur 1331, de tout ou partie des échanges et procédés décrits en relation avec les figures précitées illustrant un procédé selon un mode de réalisation précédemment décrit.

Tout ou partie des échanges et procédés décrits en relation avec des figures précitées peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 133 comprend de la circuiterie électronique configurée pour mettre en oeuvre les procédés décrits en relation avec le dispositif noeud 133 (de même pour le dispositif noeud 134).

La **Fig. 11** illustre schématiquement un exemple d'architecture en réception multi-bandes. Plus particulièrement, est illustrée une chaîne de traitement en réception 1120 d'un dispositif noeud, tel que le dispositif noeud 134. La chaîne de traitement en réception 1120 comprend deux démodulateurs DEM 1 1124 et DEM2 1126 et peut donc traiter une réception en mono-bande, en multi-bande ou en bande fréquentielle étendue (avec ici la conjonction de deux bandes fréquentielles disjointes). La chaîne de traitement 1120 comprend un étage de gain programmable AMP 1121 configuré pour supporter toute la dynamique d'entrée des multiples bandes fréquentielles et éviter une saturation éventuelle des signaux de l'une des bandes fréquentielles disjointes. Un étage de conversion analogique-numérique ECH 1122 opère la conversion et contrôle le gain de l'étage de gain programmable AMP 21. L'étage de conversion ECH 22 est mutualisé et la fréquence d'échantillonnage est définie par rapport à la fréquence d'échantillonnage requise dans la bande fréquentielle disjointe présentant la fréquence la plus élevée. La séparation des données transmises dans les différentes bandes fréquentielles est ensuite réalisée avec des filtres numériques F1 1123 et F2 1125 respectifs. Les bandes fréquentielles étant disjointes, leurs signaux respectifs peuvent être distingués aisément de la sorte. Les données en sortie de chacun des filtres numériques F1 et F2 sont alors respectivement transmises aux démodulateurs DEM1 1124 et DEM2 1126. La sortie des démodulateurs DEM1 1124 et DEM2 1126 est traitée par un décodeur FEC 1128, par l'intermédiaire d'une première mémoire MEM1 1127, dite mémoire de désentrelacement. Les données sont chargées selon un agencement prédéfini de sorte à pouvoir les désentrelacer selon plusieurs modes de désentrelacement qui correspondent à l'inverse des opérations d'entrelacement effectuées à l'émission. Un circuit de désentrelacement du décodeur FEC 1128 lit les données dans la première mémoire de désentrelacement MEM1 1127 et est configuré pour vérifier si les données désentrelacées apparaissent cohérentes.

Dans le cas où les données désentrelacées apparaissent cohérentes, elles sont enregistrées dans une seconde mémoire MEM2 1129, dite mémoire de réception de la sous-couche de liaison MAC. Les données ainsi stockées dans la mémoire de réception MEM2 1129 constituent des trames de données prêtes à être traitées par la couche MAC du modèle ISO. La cohérence des données désentrelacées selon un mode de désentrelacement propre à une transmission en bande fréquentielle étendue est d'abord vérifiée. Si les données ne sont pas cohérentes, cela signifie qu'un autre mode de transmission a été utilisé pour la transmission des données et une seconde opération de désentrelacement, par le biais de chacune des tables de désentrelacement mono-bande est opérée. L'architecture présentée n'est pas limitative, et un dispositif noeud peut comprendre, par exemple, trois démodulateurs ou plus (et leurs filtres correspondants), en fonction du nombre de bandes fréquentielles dans lesquelles il doit pouvoir opérer une réception de données.

Les procédés décrits ci-avant selon les différents modes de réalisation sont particulièrement avantageux dans le contexte d'un réseau maillé de type G3-PLC pour augmenter les performances de communication entre des dispositifs noeuds d'un tel réseau.

Bien évidemment, les modes de réalisation décrits ne sont pas exclusifs, et peuvent être combinés. Ainsi, par exemple, un dispositif noeud étant configuré pour émettre en bande fréquentielle étendue peut en outre utiliser un mode de communication en multi-bandes mettant en oeuvre une fragmentation d'un message, chaque fragment étant susceptible d'être transmis sur une bande fréquentielle disjointe parmi celles utilisables. Selon un autre exemple, un dispositif noeud configuré pour implémenter un procédé d'optimisation du temps de transmission peut également être configuré pour optimiser la bande passante sur du réseau de communication dans lequel il opère.

## Revendications

1. Procédé de transmission de données, sous forme de messages, dans un réseau de communication (120) par courants porteurs en ligne, le procédé étant exécuté dans un premier dispositif noeud (133) dudit réseau (120) configuré pour communiquer dans une pluralité de bandes fréquentielles disjointes avec un second dispositif noeud (134) dudit réseau (120), le procédé comprenant une émission d'un message dans un mode de transmission utilisant parallèlement au moins deux bandes fréquentielles disjointes parmi ladite pluralité de bandes fréquentielles disjointes, et le procédé étant **caractérisé en ce que** l'émission d'un message dans un mode de transmission utilisant parallèlement au moins deux bandes fréquentielles disjointes comprend une utilisation d'une bande fréquentielle dite bande fréquentielle étendue comprenant au moins deux bandes fréquentielles disjointes parmi ladite pluralité de bandes fréquentielles disjointes, chaque bande fréquentielle disjointe comprenant une pluralité de sous-porteuses, le procédé comprenant en outre une étape d'entrelacer des données d'un message à transmettre adaptée à une émission desdites données réparties sur l'ensemble desdites sous-porteuses.

**2.** Procédé selon la revendication 1, dans lequel l'opération d'entrelacer des données comprend :

- obtenir une première table d'entrelacement T [*m, n*] d'éléments binaires représentatifs des données à transmettre, la première table d'entrelacement comprenant autant de secondes tables d'entrelacement Ti [$m_i$, $n_i$] d'éléments binaires que de bandes fréquentielles disjointes comprises dans la bande étendue, chaque seconde table d'entrelacement Ti [$m_i$, $n_i$] étant attribuée à une seule des au moins deux bandes fréquentielles disjointes de la bande fréquentielle étendue, les dimensions $m_i$, $n_i$ de chacune des secondes tables d'entrelacement Ti [$m_i$, $n_i$] étant définies selon un type de modulation utilisé pour l'émission des données dans la bande fréquentielle disjointe à laquelle une seconde table d'entrelacement est attribuée, des éventuelles différences de dimensions entre des secondes tables d'entrelacement étant susceptibles de générer une ou plusieurs positions dites invalides comprises dans la première table d'entrelacement mais non comprises dans l'une au moins des secondes tables d'entrelacement,
- entrelacer les éléments binaires par décalages successifs des lignes m et des colonnes *n* de la première table T [*m, n*] d'entrelacement, les décalages successifs étant réalisés sous forme de permutations circulaires des éléments binaires respectivement par ligne et par colonne,
- déplacer tout élément binaire détecté comme présent à une position invalide de la première table d'entrelacement vers une position d'une dite seconde table d'entrelacement qui est disponible après l'entrelacement des éléments binaires de la première table d'entrelacement, de sorte que chaque seconde table d'entrelacement comprenne des éléments binaires affectés à l'un desdits groupes de données,
- orienter les éléments binaires de chacun des groupes de données vers une circuiterie électronique configurée pour moduler et transmettre lesdits éléments binaires.

**3.** Procédé selon la revendication 1, le procédé comprenant, préalablement à la transmission du message, les étapes de :

- estimer, pour chaque bande fréquentielle disjointe, une durée de transmission dudit message dans cette bande fréquentielle,
- obtenir d'une base de données, des résultats d'intégration de taux d'occupation de chaque bande fréquentielle, déterminés pendant plusieurs échelles de temps correspondant à la durée d'émission théorique du message dans chaque bande fréquentielle,
- sélectionner, à partir des résultats d'intégration de taux d'occupation de chaque bande fréquentielle déterminés pendant plusieurs échelles de temps obtenus, une bande fréquentielle, et
- transmettre le message dans la bande fréquentielle sélectionnée.

**4.** Procédé selon la revendications 1, dans lequel le second dispositif noeud (134) est atteignable depuis le premier dispositif noeud (133) par au moins deux routes de communication différentes, le procédé comprenant :

- obtenir un coût de route pour chacune desdites routes de communication ; et
- sélectionner parmi lesdites routes de communication, la route de communication correspondant au coût de route le plus petit.

**5.** Procédé selon l'une des revendications 1 à 4, le procédé comprenant les étapes de :

- transmettre un exemplaire d'un premier message vers le second dispositif noeud (134) dans chacune desdites au moins deux bandes fréquentielles disjointes, ledit premier message comprenant une information selon laquelle une estimation de canal est demandée au second dispositif noeud (134) par ledit premier dispositif noeud (133),
- recevoir un second message émis par le second dispositif noeud (134) sur chaque bande fréquentielle disjointe via laquelle le second dispositif noeud (134) a reçu un dit exemplaire du premier message, chaque second message comprenant des informations représentatives d'une estimation de canal pour la bande fréquentielle disjointe via laquelle ledit second message est reçu,
- enregistrer, par le premier dispositif noeud (133), les informations représentatives de l'estimation de canal contenues dans chaque second message reçu, et
- déterminer, à partir des informations enregistrées, un mode de transmission d'un troisième message à émettre ultérieurement depuis le premier dispositif noeud (133) vers le second dispositif noeud (134).

**6.** Procédé selon l'une quelconque des revendications précédentes, dans lequel lesdites au moins deux bandes fréquentielles disjointes sont parmi le groupe : bande fréquentielle CENELEC A, bande fréquentielle CENELEC B, et bande fréquentielle FCC ou bande fréquentielle ARIB.

7. Procédé selon l'une quelconque des revendications précédentes, dans lequel ledit réseau de communication par courants porteurs en ligne est un réseau maillé de type G3-PLC.

8. Dispositif noeud (133) destiné à être utilisé dans un réseau de communication (120) par courants porteurs en ligne, le dispositif noeud (133) étant configuré pour communiquer dans une pluralité de bandes fréquentielles disjointes avec un second dispositif noeud (134) dudit réseau (120) et pour appliquer un mode de transmission dans, parallèlement, au moins deux bandes fréquentielles disjointes parmi une pluralité de bandes fréquentielles disjointes, le dispositif noeud (133) étant **caractérisé en ce qu'**il est configuré pour émettre ledit message dans un mode de transmission utilisant parallèlement au moins deux bandes fréquentielles disjointes en utilisant une bande fréquentielle dite bande fréquentielle étendue comprenant au moins deux bandes fréquentielles disjointes parmi ladite pluralité de bandes fréquentielles disjointes, chaque bande fréquentielle disjointe comprenant une pluralité de sousporteuses, le dispositif noeud (133) comprenant une circuiterie d'entrelacement pour entrelacer des données d'un message à transmettre adaptée à une émission desdites données réparties sur l'ensemble desdites sous-porteuses.

9. Réseau de communication (120) par courants porteurs en ligne comprenant une pluralité de dispositifs noeuds selon la revendication 8.

10. Produit programme d'ordinateur **caractérisé en ce qu'**il comprend des instructions de codes de programme pour exécuter les étapes du procédé selon l'une quelconque des revendications 1 à 7, lorsque ledit programme est exécuté par un processeur.

11. Support de stockage d'informations comprenant un produit programme d'ordinateur selon la revendication précédente.

**Patentansprüche**

1. Verfahren zur Übertragung von Daten in Form von Nachrichten in einem Powerline-Kommunikationsnetz (120), wobei das Verfahren in einer ersten Knotenvorrichtung (133) des Netzes (120) ausgeführt wird, die dazu konfiguriert ist, in mehreren getrennten Frequenzbändern mit einer zweiten Knotenvorrichtung (134) des Netzes (120) zu kommunizieren, wobei das Verfahren das Senden einer Nachricht in einem Übertragungsmodus unter paralleler Verwendung von mindestens zwei getrennten Frequenzbändern aus den mehreren getrennten Frequenzbändern umfasst und wobei das Verfahren **dadurch gekennzeichnet ist, dass** das Senden einer Nachricht in einem Übertragungsmodus unter paralleler Verwendung von mindestens zwei getrennten Frequenzbändern die Verwendung eines sogenannten Frequenzbands umfasst, das als erweitertes Frequenzband bezeichnet wird und mindestens zwei getrennte Frequenzbänder aus den mehreren getrennten Frequenzbändern umfasst, wobei jedes getrennte Frequenzband mehrere Unterträger umfasst, wobei das Verfahren ferner einen Schritt des Verschachtelns von Daten einer zu übertragenden Nachricht umfasst, der für ein Senden der auf alle Unterträger verteilten Daten ausgelegt ist.

2. Verfahren nach Anspruch 1, wobei der Schritt des Verschachtelns der Daten Folgendes umfasst:
Erhalten einer ersten Verschachtelungstabelle T [$m$, $n$] von Binärelementen, die für die zu übertragenden Daten repräsentativ sind, wobei die erste Verschachtelungstabelle so viele zweite Verschachtelungstabellen Ti [$m_i$, $n_i$] von Binärelementen umfasst, wie getrennte Frequenzbänder im erweiterten Band enthalten sind, wobei jede zweite Verschachtelungstabelle Ti [$m_i$, $n_i$] nur einem der mindestens zwei getrennten Frequenzbänder des erweiterten Frequenzbands zugeordnet ist, wobei die Abmessungen $m_i$, $n_i$ jeder der zweiten Verschachtelungstabellen Ti [$m_i$, $n_i$] gemäß einem Modulationstyp definiert sind, der für das Senden der Daten im getrennten Frequenzband, dem eine zweite Verschachtelungstabelle zugeordnet ist, verwendet wird, wobei etwaige Differenzen in den Abmessungen zwischen zweiten Verschachtelungstabellen geeignet sind, eine oder mehrere sogenannte ungültige Positionen zu erzeugen, die in der ersten Verschachtelungstabelle enthalten sind, aber nicht in der mindestens einer der zweiten Verschachtelungstabellen enthalten sind,

- Verschachteln der Binärelemente durch aufeinanderfolgende Verschiebungen der Zeilen m und der Spalten n der ersten Verschachtelungstabelle T [$m$, $n$], wobei die aufeinanderfolgenden Verschiebungen in Form von kreisförmigen Permutationen der Binärelemente pro Zeile bzw. pro Spalte erfolgen,
- Bewegen jedes Binärelements, das als an einer ungültigen Position der ersten Verschachtelungstabelle vorhanden erkannt wurde, in eine Position einer zweiten Verschachtelungstabelle, die nach der Verschiebung der Binärelemente der ersten Verschachtelungstabelle verfügbar ist, sodass jede zweite Verschachtelungstabelle Binärelemente enthält, die einer der Datengruppen zugeordnet ist,
- Ausrichten der Binärelemente jeder der Datengruppen auf eine elektronische Schaltungsanordnung, die dazu konfiguriert ist, die Binärelemente zu modulieren und zu übertragen.

**3.** Verfahren nach Anspruch 1, wobei das Verfahren vor der Übertragung der Nachricht die folgenden Schritte umfasst:

- für jedes getrennte Frequenzband Schätzen einer Dauer für die Übertragung der Nachricht in diesem Frequenzband,
- aus einer Datenbank Erhalten von Ergebnissen der Integration von Belegungsgraden jedes Frequenzbands, die während mehrerer Zeitskalen bestimmt wurden, die der theoretischen Sendedauer der Nachricht in jedem Frequenzband entsprechen,
- Auswählen eines Frequenzbands aus den erhaltenen Ergebnissen der Integration von Belegungsgraden jedes Frequenzbands, die während mehrerer Zeitskalen bestimmt wurden, und
- Übertragen der Nachricht im ausgewählten Frequenzband.

**4.** Verfahren nach Anspruch 1, wobei die zweite Knotenvorrichtung (134) von der ersten Knotenvorrichtung (133) über mindestens zwei verschiedene Kommunikationsstrecken erreichbar ist, wobei das Verfahren Folgendes umfasst:

- Erhalten von Streckenkosten für jede der Kommunikationsstrecken und
- Auswählen der Kommunikationsstrecke aus den Kommunikationsstrecken, die den geringsten Streckenkosten entspricht.

**5.** Verfahren nach einem der Ansprüche 1 bis 4, wobei das Verfahren die folgenden Schritte umfasst:

- Übertragen eines Exemplars einer ersten Nachricht an die zweite Knotenvorrichtung (134) in jedem der mindestens zwei getrennten Frequenzbänder, wobei die erste Nachricht eine Information enthält, dass durch die erste Knotenvorrichtung (133) eine Kanalschätzung von der zweiten Knotenvorrichtung (134) angefordert wird,
- Empfangen einer zweiten Nachricht, die durch die zweite Knotenvorrichtung (134) auf jedem getrennten Frequenzband, über das die zweite Knotenvorrichtung (134) ein Exemplar der ersten Nachricht empfangen hat, gesendet wurde, wobei jede zweite Nachricht Informationen umfasst, die für eine Kanalschätzung für das getrennte Frequenzband, über das die zweite Nachricht empfangen wurde, repräsentativ sind,
- Aufzeichnen der in jeder empfangenen zweiten Nachricht enthaltenen Informationen, die die Kanalschätzung darstellen, durch die erste Knotenvorrichtung (133) und
- anhand der aufgezeichneten Informationen Bestimmen eines Übertragungsmodus einer dritten Nachricht, die später von der ersten Knotenvorrichtung (133) an die zweite Knotenvorrichtung (134) zu senden ist.

**6.** Verfahren nach einem der vorangehenden Ansprüche, wobei die mindestens zwei getrennten Frequenzbänder aus folgender Gruppe stammen: CENELEC-A-Frequenzband, CENELEC-B-Frequenzband und FCC-Frequenzband oder ARIB-Frequenzband.

**7.** Verfahren nach einem der vorangehenden Ansprüche, wobei das Powerline-Kommunikationsnetz ein Maschennetz vom Typ G3-PLC ist.

**8.** Knotenvorrichtung (133) zur Verwendung in einem Powerline-Kommunikationsnetz (120), wobei die Knotenvorrichtung (133) dazu konfiguriert ist, in mehreren getrennten Frequenzbändern mit einer zweiten Knotenvorrichtung (134) des Netzes (120) zu kommunizieren und einen Übertragungsmodus parallel in mindestens zwei getrennten Frequenzbändern aus mehreren getrennten Frequenzbändern anzuwenden, wobei die Knotenvorrichtung (133) **dadurch gekennzeichnet ist, dass** sie dazu konfiguriert ist, die Nachricht in einem Übertragungsmodus unter paralleler Verwendung von mindestens zwei getrennten Frequenzbändern mit Verwendung eines Frequenzbands, das als erweitertes Frequenzband bezeichnet wird und mindestens zwei getrennte Frequenzbänder aus den mehreren getrennten Frequenzbändern umfasst, zu senden, wobei jedes getrennte Frequenzband mehrere Unterträger umfasst, wobei die Knotenvorrichtung (133) eine Verschachtelungsschaltungsanordnung zum Verschachteln der Daten einer zu sendenden Nachricht umfasst, die für ein Senden der auf alle Unterträger verteilten Daten ausgelegt ist.

**9.** Powerline-Kommunikationsnetz (120), umfassend mehrere Knotenvorrichtungen nach Anspruch 8.

**10.** Computerprogrammprodukt, **dadurch gekennzeichnet, dass** es Programmcodeanweisungen umfasst, um die Schritte des Verfahrens nach einem der Ansprüche 1 bis 7 auszuführen, wenn das Programm durch einen Prozessor ausgeführt wird.

**11.** Informationsspeichermedium, umfassend ein Computerprogrammprodukt nach dem vorangehenden Anspruch.

**Claims**

**1.** Method for transmitting data, in the form of messages, in a power line communication network (120), the method being executed in a first node device (133) of said network (120) configured so as to communicate in a plurality of separate frequency bands with a second node device (134) of said network (120), the method comprising transmitting a message in a transmission mode using at least two separate frequency bands from among said plurality of separate frequency bands in parallel, and the method being **characterized in that** the transmission of a message in a transmission mode using at least two separate frequency bands in parallel comprises using a frequency band called extended frequency band comprising at least two separate frequency bands from among said plurality of separate frequency bands, each separate frequency band comprising a plurality of subcarriers, the method furthermore comprising a step of interleaving the data in a message to be transmitted, designed to transmit said data distributed on all of said subcarriers.

**2.** Method according to Claim 1, wherein the data interleaving operation comprises:

- obtaining a first interleaving table T $[m, n]$ of bits representative of the data to be transmitted, the first interleaving table comprising the same number of second interleaving tables Ti $[m_i, n_i]$ of bits as there are separate frequency bands contained in the extended band, each second interleaving table Ti $[m_i, n_i]$ being assigned to just one of the at least two separate frequency bands of the extended frequency band, the dimensions $m_i$, $n_i$ of each of the second interleaving tables Ti $[m_i, n_i]$ being defined in accordance with a modulation type used for the transmission of the data in the separate frequency band to which a second interleaving table is assigned, any differences in dimensions between second interleaving tables being liable to generate one or more positions that are said to be invalid, contained in the first interleaving table but not contained in at least one of the second interleaving tables,
- interleaving the bits by successively shifting the rows $m$ and columns $n$ of the first interleaving table T $[m, n]$, the successive shifts being performed in the form of circular permutations of the bits respectively by row and by column,
- moving any bit detected as being present at an invalid position of the first interleaving table to a position of a said second interleaving table that is available following the interleaving of the bits of the first interleaving table, such that each second interleaving table comprises bits assigned to one of said groups of data,
- directing the bits of each of the groups of data to electronic circuitry configured so as to modulate and transmit said bits.

**3.** Method according to Claim 1, the method comprising the following steps prior to the transmission of the message:

- estimating, for each separate frequency band, a transmission duration of said message in this frequency band,
- obtaining, from a database, occupancy level integration results for each frequency band, determined during a plurality of time scales corresponding to the theoretical transmission duration of the message in each frequency band,
- selecting a frequency band based on the occupancy level integration results for each frequency band determined during a plurality of obtained time scales, and
- transmitting the message in the selected frequency band.

**4.** Method according to Claim 1, wherein the second node device (134) is reachable from the first node device (133) through at least two different communication routes, the method comprising:

- obtaining a route cost for each of said communication routes; and
- selecting, from among said communication routes, the communication route corresponding to the smallest route cost.

**5.** Method according to one of Claims 1 to 4, the method comprising the following steps:

- transmitting a copy of a first message to the second node device (134) in each of said at least two separate frequency bands, said first message comprising information according to which a channel estimate is requested from the second node device (134) by said first node device (133),

- receiving a second message transmitted by the second node device (134) on each separate frequency band via which the second node device (134) has received a said copy of the first message, each second message comprising information representative of a channel estimate for the separate frequency band via which said second message is received,

- the first node device (133) recording the information, representative of the channel estimate, contained in each received second message, and

- determining, based on the recorded information, a transmission mode for transmitting a third message to be transmitted subsequently from the first node device (133) to the second node device (134).

6. Method according to any one of the preceding claims, wherein said at least two separate frequency bands are chosen from among the following group: CENELEC A frequency band, CENELEC B frequency band, and FCC frequency band or ARIB frequency band.

7. Method according to any one of the preceding claims, wherein said power line communication network is a G3-PLC meshed network.

8. Node device (133) intended to be used in a power line communication network (120), the node device (133) being configured so as to communicate in a plurality of separate frequency bands with a second node device (134) of said network (120) and so as to apply a transmission mode for transmitting in parallel in at least two separate frequency bands from among a plurality of separate frequency bands, the node device (133) being **characterized in that** it is configured so as to transmit said message in a transmission mode using at least two separate frequency bands in parallel using a frequency band called extended frequency band comprising at least two separate frequency bands from among said plurality of separate frequency bands, each separate frequency band comprising a plurality of subcarriers, the node device (133) comprising interleaving circuitry for interleaving the data in a message to be transmitted, designed to transmit said data distributed on all of said subcarriers.

9. Power line communication network (120) comprising a plurality of node devices according to Claim 8.

10. Computer program product, **characterized in that** it comprises program code instructions for executing the steps of the method according to any one of Claims 1 to 7 when said program is executed by a processor.

11. Information storage medium comprising a computer program product according to the preceding claim.

Fig. 1

S20

INIT

S21

Sélectionner un mode
de transmission en
bande étendue

S22

Répartir les données à
transmettre en groupes, par
bande fréquentielle

S23

Transmettre les groupes de
données sur les bandes
fréquentielles

Fig. 2

T

| b22 | b24 | b17 | b19 | b23 | b25 | b26 | b4 |
|-----|-----|-----|-----|-----|-----|-----|-----|
| b12 | b14 | b9 | b11 | b13 | b15 | b16 | b10 |
|  |  |  | b6 | b18 | b20 | b21 | b1 |
|  |  |  | b3 | b5 | b7 | b8 | b2 |

T

T1

| b22 | b24 | b17 |
|-----|-----|-----|
| b12 | b14 | b9 |

T2

| b19 | b23 | b25 | b26 | b4 |
|-----|-----|-----|-----|-----|
| b11 | b13 | b15 | b16 | b10 |
| b6 | b18 | b20 | b21 | b1 |
| b3 | b5 | b7 | b8 | b2 |

Fig. 3

S400

Début

S410

Transmettre un message sur
une première bande fréquentielle
disjointe,
le message étant modulé
selon un mode robuste

S420

Transmettre le même message sur
au moins une deuxième bande fréquentielle
disjointe, différente de la première bande
fréquentielle, le message étant modulé selon le
mode robuste

Fin

S430

Fig. 4

```
                    ┌─────────────────┐
                    │      Début      │ ⟋ S500
                    └─────────────────┘
                             │
                             ▼
         ┌───────────────────────────────────┐
         │  Fragmentation du message M en au  │ ⟋ S510
         │       moins deux fragments         │
         └───────────────────────────────────┘
                             │
                             ▼
         ┌───────────────────────────────────┐
         │  Association d'une bande fréquentielle │ ⟋ S520
         │     disjointe à chacun des fragments   │
         └───────────────────────────────────┘
                             │
                             ▼
         ┌───────────────────────────────────┐
         │  Transmission des fragments sur la │ ⟋ S530
         │     bande fréquentielle associée   │
         └───────────────────────────────────┘
                             │
                             ▼
                        S540
                      ◇──────────◇
                     ╱   Tous      ╲        non
                    ◇ les fragments  ◇ ─────────────►
                     ╲  transmis ?  ╱
                      ◇──────────◇
                             │ oui
                             ▼        S550
                    ┌─────────────────┐
                    │       Fin       │ ⟋
                    └─────────────────┘
```

Fig. 5

Réception d'un fragment de message dans un première bande fréquentielle disjointe — S60

Réception ACK du fragment dans la première bande fréquentielle disjointe — S61

Sélection d'une deuxième bande fréquentielle disjointe — S62

Relayage du fragment dans la seconde bande fréquentielle disjointe — S63

Réception ACK du fragment dans la seconde bande fréquentielle disjointe — S64

Fig. 6

S71

Message à envoyer

S72

Obtention de la bande passante théorique
dans chaque bande fréquentielle disjointe

S73

Estimation de la durée d'émission
dans chaque bande fréquentielle disjointe

S74

Interrogation des bases de données

S75

Sélection d'au moins une bande

S76

Emission du message

Fig. 7

S800

Début, k = 0

S810

Obtenir un coût de route RCk pour une route de communication

S820

k = k +1

K <= N − 1 ?

S830

Sélectionner une route de communication

S840

Fin

Fig. 8

Fig. 9

Fig. 10

Fig. 11

**RÉFÉRENCES CITÉES DANS LA DESCRIPTION**

**Documents brevets cités dans la description**

- US 2012134395 A